# EUROPÄISCHE PATENTSCHRIFT

(11) **EP 2 247 942 B1**
(45) Veröffentlichungstag und Bekanntmachung des Hinweises auf die Patenterteilung: **08.07.2015**
(21) Anmeldenummer: 09713934.9
(22) Anmeldetag: 19.02.2009
(51) Int. Cl.: G01N 21/45, G01N 21/31, G01N 33/487

(54) **MARKERFREIES CHROMOSOMENSCREENING**
NON-MARKER CHROMOSOME SCREENING
CRIBLAGE CHROMOSOMIQUE SANS MARQUEUR

(30) Priorität: 27.02.2008 DE 102008011283
(43) Veröffentlichungstag der Anmeldung: 10.11.2010
(73) Patentinhaber: Hochschule Reutlingen, 72762 Reutlingen (DE)
(72) Erfinder: KESSLER, Rudolf, 72762 Reutlingen (DE); MERZ, Tobias, 3600 Thun (CH); REBNER, Karsten, 70771 Leinfelden-Echterdingen (DE)
(74) Vertreter: Elbel, Michaela
(86) Internationale Anmeldenummer: PCT/EP2009/051953
(87) Internationale Veröffentlichungsnummer: WO 2009/106473

(56) Entgegenhaltungen:
- US-A1- 2005 244 863
- US-B1- 6 194 148
- JÜRGEN BEUTHAN ET AL: "The Spatial Resolution of Near-Field Optical Microscope on Chromosomes and Cell Traces" IEEE JOURNAL OF SELECTED TOPICS IN QUANTUM ELECTRONICS, IEEE SERVICE CENTER, PISCATAWAY, NJ, US, Bd. 7, Nr. 6, 1. November 2001 (2001-11-01), XP011066085 ISSN: 1077-260X
- BETZIG E ET AL: "NEAR-FIELD OPTICS: MICROSCOPY, SPECTROSCOPY, AND SURFACE MODIFICATION BEYOND THE DIFFRACTION LIMIT" SCIENCE, AMERICAN ASSOCIATION FOR THE ADVANCEMENT OF SCIENCE, US, WASHINGTON, DC, Bd. 257, Nr. 5067, 10. Juli 1992 (1992-07-10), Seiten 189-195, XP000407046 ISSN: 0036-8075
- MERZ T ET AL: "Spectroscopic imaging in the near field with an apertureless solid immersion lens microscope" PROCEEDINGS OF THE SPIE - THE INTERNATIONAL SOCIETY FOR OPTICAL ENGINEERING 2007 SPIE - THE INTERNATIONAL SOCIETY FOR OPTICAL ENGINEERING USA,, Bd. 6631, 17. Juni 2007 (2007-06-17), Seiten 1-12, XP007908774 in der Anmeldung erwähnt
- GHISLAIN L P ET AL: "Near-field scanning solid immersion microscope" APPLIED PHYSICS LETTERS, AIP, AMERICAN INSTITUTE OF PHYSICS, MELVILLE, NY, US, Bd. 72, Nr. 22, 1. Juni 1998 (1998-06-01), Seiten 2779-2781, XP012020314 ISSN: 0003-6951
- VAN HULST F ET AL: "Biological Applications of Near-field Optical Microscopy" IEEE ENGINEERING IN MEDICINE AND BIOLOGY MAGAZINE, IEEE SERVICE CENTER, PISACATAWAY, NJ, US, Bd. 15, Nr. 1, 1. Januar 1996 (1996-01-01), Seiten 51-58, XP011084668 ISSN: 0739-5175
- MOERS M H P ET AL: "Optical contrast in near-field techniques" ULTRAMICROSCOPY, AMSTERDAM, NL, Bd. 57, Nr. 2-3, 1. Februar 1995 (1995-02-01), Seiten 298-302, XP022603279 ISSN: 0304-3991 [gefunden am 1995-02-01]
- FUJITA KATSUMASA ET AL: "Label-free molecular imaging of living cells" MOLECULES AND CELLS, SEOUL, KR, Bd. 26, Nr. 6, 31. Dezember 2008 (2008-12-31), Seiten 530-535, XP007908784 ISSN: 1016-8478
- MERZ T ET AL: "Breaking the diffraction limit by a Near Field Microscope with a Solid Immersion Lens AFM Combination" DOKTORANDENSEMINAR ATTENDORN 2008, 10.-12.02.2008,, Bd. Doktorandenvortrag 3, 12. Februar 2008 (2008-02-12), Seiten 9-12, XP007909406
- HARTMANN U: "An Elementary Introduction to Atomic Force Microscopy and Related Methods" INTERNET CITATION, [Online] 1. März 2006 (2006-03-01), Seite 61pp, XP007909392 Gefunden im Internet: URL:http://www.uni-saarland.de/fak7/hartma nn/files/docs/pdf/download/Intr oductionAfm.pdf> [gefunden am 2009-08-03]
- MANSFIELD S M ET AL: "SOLID IMMERSION MICROSCOPE" APPLIED PHYSICS LETTERS, AIP, AMERICAN INSTITUTE OF PHYSICS, MELVILLE, NY, US, Bd. 57, Nr. 24, 10. Dezember 1990 (1990-12-10), Seiten 2615-2616, XP000216394 ISSN: 0003-6951
- LEJEUNE J; RETHORÉ M O; DE BLOIS M C; RAVEL A: "Chromosomes achromiques. Une méthode simple d'observation", ANNALES DE GÉNÉTIQUE, vol. 27, no. 4, 1 April 1984 (1984-04-01), pages 257-258, XP009181729,

## Beschreibung

### Gebiet der Erfindung

Die Erfindung betrifft ein Verfahren zum Analysieren von Chromosomen, sowie die Verwendung eines Nahfeldmikroskops zur Analyse von ungefärbten Chromosomen.

### Hintergrund der Erfindung

Chromosomen sind Strukturen, die Gene und damit Erbinformationen enthalten. Sie enthalten DNA, die mit Proteinen verpackt ist, und kommen in Kernen eukaryotischer Zellen vor.

Mitte des 20. Jahrhunderts wurden Techniken entwickelt, um die Chromosomen aus Zellen, die sich in der Metaphase befinden, nach Zahl und Struktur zu analysieren. In einem Metaphasepräparat liegen die Chromosomen einer Zelle ausgebreitet nebeneinander, d.h. gespreitet, auf einem Objektträger, so dass sie im Mikroskop abgezählt und miteinander verglichen werden können. In guten Präparaten haben die einzelnen Chromosomen dabei die häufig dargestellte X-ähnliche Form.

Eine klassische Färbetechnik zur Darstellung von Chromosomen in der Metaphase ist die Giemsa Färbung. Nach einer Behandlung der Chromosomen mit dem Enzym Trypsin wird der Chromatin Komplex aus DNA und gebundenen Histonproteinen mit Hilfe von Methylenblau angefärbt. Je nach Basenzusammensetzung, Chromatinkondensation und Zeitpunkt der Replikation ergeben sich abwechselnd dunkel gefärbte Abschnitte (G-Banden) und hell gefärbte (R-Banden) Abschnitte. Durch das gebänderte Profil ist beim Menschen und einigen Tieren eine eindeutige Identifizierung aller Chromosomen möglich (Zhao et al., 1998).

Weitere Chromosomenanalyseverfahren, die auf Färbetechniken basieren, sind Fluoreszenz *in situ* Hybridisierung (FISH) und spektrale Karyotypisierung (SKY).

Bei der FISH Technik werden künstlich hergestellte Sonden aus Nukleinsäuren eingesetzt, die über Basenpaarungen an die nachzuweisende Nukleinsäure hybridisiert. Nach der Hybridisierung, die zwischen einer Stunde und mehreren Tagen dauert, liegen Hybridmoleküle aus den Nukleinsäuren des Präparats und der Sonde vor. Die gebundenen Sondenmoleküle können nachgewiesen werden. Bei einer indirekten Markierung geschieht dieser Nachweis über eine Antikörperfärbung oder Avidin, die wiederum an Fluorochrome gebunden sind. Für jedes Fluorochrom werden Einzelbilder über Filtersysteme aufgenommen, die dann überlagert werden (Bayani und Squire, 2002; Zhao et al., 1998).

Die SKY Technik basiert auf Fourier-Spektroskopie, wobei ein Interferometer die Messung des gesamten emittierten Lichtspektrums für jeden Bildpunkt ermöglicht. Hierfür werden chromosomenspezifische Farbsonden eingesetzt, so dass jedes Chromosom ein charakteristisches Emissionsspektrum erhält. Durch Umsetzung dieser spezifischen Spektren in Pseudofarben ist/sind jedes Chromosom und ggf. chromosomale Aberrationen identifizierbar (Bayani und Squire, 2002)

Bei der Analyse von gefärbten Chromosomen bestimmen die Färbequalität, der Kondensationsgrad und die Spreitung das gebänderte Profil oder die spektralen Eigenschaften der Chromosomen. Damit variiert bei diesen Techniken die Aussagekraft über mögliche strukturelle Anomalien der Chromosomen in Abhängigkeit von den Färbe- und Präparationsverfahren. Ein weiterer Nachteil der Färbetechniken besteht in ihrer zeitintensiven Durchführung und Analyse, die eine spezialisierte methodische Fertigkeit und eine genaue Kenntnis der Chromosomenbänderung benötigt. Zudem sind Wiederholungsfärbungen oder Doppelfärbungen, wie z.B. FISH auf Giemsa, häufig nötig, um eine Analyse zu ermöglichen und zu verifizieren.

Neben den oben geschilderten auf Färbung basierenden Techniken verwendet die Rasterkraftmikroskopie nicht markierte Chromosomen. Hierbei wird eine Karyotypisierung aufgrund von Länge, Breite, Höhe oder Volumen bzw. spezifischem Höhenprofil je Chromosom durchgeführt, indem eine mikroskopisch kleine Nadel die Probenoberfläche abrastert. Dieses Verfahren ist technisch äußerst aufwändig und gegenüber Vibrationen, Wärme und statischer Aufladung sehr störungsanfällig. Zudem weist es systembedingte Fehler auf, so dass nicht die tatsächliche Probenoberfläche, sondern eine Faltung der Geometrie der Nadelspitze mit der Struktur der Oberfläche abgebildet wird.

Lejeune et al., 1984, offenbart ein Verfahren zur Betrachtung ungefärbter humaner Chromosomen durch Phasenkontrastmikroskopie.

Mit Hilfe der Chromosomenanalyse können Abweichungen im Karyotyp, d.h. Veränderungen der Chromosomenzahl, wie z.B. Trisomie 21, Monosomie X, oder strukturelle Aberrationen, wie z.B. Translokation, Deletion, Inversion, nachgewiesen werden. In der Diagnostik wird zwischen der pränatalen und postnatalen Chromosomenanalyse sowie der Präimplantationsanalyse unterschieden. Durch eine pränatale Karyotypisierung können Föten bereits während der Schwangerschaft nach einer Amniozentese oder Chorionzottenbiopsie auf mögliche Erkrankungen und Schädigungen untersucht werden. Insbesondere im Bereich der pränatalen Diagnostik besteht ein großer Bedarf nach einem zuverlässigen und schnellen Test zur Karyotypisierung, der auch von nicht spezialisiertem Personal einer Arztpraxis durchgeführt werden kann. Durch das höhere Alter werdender Eltern hat die pränatale Diagnostik zunehmend an Wichtigkeit gewonnen.

Eine Chromosomenanalyse erfolgt im Stand der Technik bislang durch störungsanfällige, aufwändige Rastertechniken oder durch Färbetechniken, die zeitintensiv sind und von Färbequalität, Kondensationsgrad und Spreitung der Chromosomen abhängen. Zudem erfordert eine auf Färbetechniken basierende Analyse eine genaue Kenntnis der Chromosomenbänderung.

Der vorliegenden Erfindung liegt deshalb die Aufgabe zugrunde, ein schnelles und einfaches Verfahren zur verbesserten Chromosomenanalyse bereitzustellen, das von Markierungs- oder Färbetechniken unabhängig ist.

Erfindungsgemäß wird diese Aufgabe durch ein Verfahren zum Analysieren von Chromosomen gelöst. In dem erfindungsgemäßen Verfahren wird ein Chromosomenpräparat angefertigt, dessen Interferenzeigenschaften gemessen werden, wodurch die Chromosomenstrukturen charakterisiert werden.

### Zusammenfassung der Erfindung

Die vorliegende Erfindung betrifft ein Verfahren zum Analysieren von Chromosomen durch
a) Bereitstellen eines Chromosomenpräparats;
b) Messen mindestens einer Interferenzeigenschaft des Chromosomenpräparats; und
c) Charakterisieren mindestens einer Chromosomenstruktur mittels der Interferenzeigenschaft.

Ferner betrifft die Erfindung die Verwendung eines Nahfeldmikroskops zur Analyse von ungefärbten Chromosomen.

### Kurzbeschreibung der Figuren

Die Figuren dienen der Erläuterung der Erfindung. Sie beabsichtigen nicht, die Erfindung auf die konkret dargestellten Formen zu beschränken.
In Figur 1A bis 1D ist je ein ungefärbter Chromosomensatz auf unterschiedlichen Materialien und Messanordnungen dargestellt.
   A: Präparation auf Glas, Auflicht-Dunkelfeld (Reflexionsanordnung 45/0)
   B: Präparation auf Si-Wafer, Auflicht-Dunkelfeld (Reflexionsanordnung 45/0)
   C: Präparation auf Gold, Auflicht-Dunkelfeld (Reflexionsanordnung 45/0)
   D: Präparation auf Gold, Auflicht-Hellfeld (Reflexionsanordnung 0/0)
Figur 2 zeigt eine Kartierung von menschlichem Chromosom Nr. 2 mit Giemsa Trypsin Giemsa (GTG) Bänderung in Transmission.
Figur 3A zeigt einzelne Reflexionsspektren von Chromosom Nr. 2 aus Figur 3B, dargestellt im Auflicht-Dunkelfeld.
Figur 4 zeigt ein Gesamtspektrum von Chromosom Nr. 2 im Auflicht-Dunkelfeld bei verschiedenen Trypsinierungszeiten.
Figur 5 zeigt einen funktionalen Zusammenhang zwischen Peak-Maximum und Trypsinierungszeit.
Figur 6A zeigt 46 Reflexionsspektren der Chromosomen. Figur 6B zeigt die 1. Ableitung der Spektren.
Figur 7 zeigt eine Hauptkomponentenanalyse von abgeleiteten Einzelspektren.
   A: Die Scorematrix für Hauptkomponenten 1 und 2.
   B: Die Faktoren-Diagramme für Hauptkomponenten 1 und 2.
Figur 8 zeigt ultraviolette (UV) Reflexionsspektren von jedem Chromosom; X-Achse: Wellenlänge, Y-Achse: Absorption.
Figur 9 zeigt eine Hauptkomponentenanalyse der Einzelspektren von UV Reflexionsspektren
   A: Die Scorematrix für Hauptkomponenten 1 und 2.
   B: Die Faktoren-Diagramme für Hauptkomponenten 1 und 2.
Figur 10A und B zeigen eine Auflösung der multivariaten Kurven (Multivariate Curve Resolution (MCR)) als Auswertung der UV Reflexionsspektren.
Figur 11 zeigt eine multivariate Bilder Analyse (MIA) eines ungefärbten Chromosomensatzes in Form einer Hauptkomponentenanalyse nach 2D-Scannen in Abhängigkeit von der Wellenlänge.
   A: Einzelbilder von Chromosom Nr.5
   B: Bilderstapel und Schema des 2D-Scannens
   C: Bild des ungefärbten Chromosomensatzes bei einer Wellenlänge
   D: Spektrum von Chromosom Nr.5
Figur 12 zeigt eine Pushbroom Darstellung von Chromosom Nr. 2 nach GTG Bänderung in Transmission.
Figur 13 zeigt eine Pushbroom Darstellung im visuellen (VIS) Bereich.
Figur 14 zeigt die schematische Anordnung von Objektiv, Festkörper Immersionslinse und Objekt, wie sie in einer erfinderischen Ausführungsform verwendet wurde.
Figur 15 zeigt die schematische Anordnung der Apparatur zur Nahfeldmikroskopie und Nahfeldspektroskopie.
Figur 16 zeigt ein Intensitätsprofil eines ungefärbten Chromosoms, welches mit einem Nahfeldmikroskop aufgenommen wurde.
Figur 17 zeigt das optische Signal eines ungefärbten Chromosoms im Nahfeld. Messstellen der in Figur 18 dargestellten Nahfeldspektren: 1= p-Arm, 2= Zentromerregion, 3= q-Arm.
Figur 18 zeigt die Nahfeldspektren im sichtbaren Wellenlängenbereich des Chromosoms aus Figur 17, an den Stellen 1, 2, und 3.

### Detaillierte Beschreibung der Erfindung

Die vorliegende Erfindung betrifft ein Verfahren zum Analysieren von Chromosomen durch
a) Bereitstellen eines Chromosomenpräparats;
b) Messen mindestens einer Interferenzeigenschaft des Chromosomenpräparats; und
c) Charakterisieren mindestens einer Chromosomenstruktur mittels der Interferenzeigenschaft.

Der hier verwendete Begriff "Chromosomenpräparat" umfasst jegliches Material, das Chromosomen enthält. Chromosomenpräparate sind damit zunächst Präparate, die einem Probanden nur entnommen, aber nicht weiter aufbereitet werden. Unter Chromosomenpräparate fallen aber auch aufbereitete Präparate, die z.B. durch histologische oder stabilisierende Verfahren oder durch Färbetechniken für die nachfolgenden Messungen verändert und optimiert wurden. Eine Aufbereitung der Chromosomen umfasst auch deren Aufbringen auf ein geeignetes Trägermaterial, wie einen Objektträger, der z.B. mit Gold, Silizium oder Kunststoffen vorbehandelt sein kann.

In einer vorteilhaften Ausführungsform wird das erfindungsgemäße Chromosomenpräparat mit Chromosomen im Mitosestadium auf Goldobjektträger oder auf mit Gold vorbehandelte Objektträger aufgebracht und mit dem Enzym Trypsin behandelt. Diese Ausführungsform lieferte sehr kontrastreiche Abbildungen.

Der hier verwendete Begriff "Interferenzeigenschaft" umfasst jede Eigenschaft und Erscheinung, die auf Interferenz beruht. Interferenz beschreibt die Überlagerung von zwei oder mehr Lichtwellen nach dem Superpositionsprinzip. Interferenzfarben und -muster entstehen beispielsweise durch Einstrahlen von Licht auf Medien mit unterschiedlicher optischer Dichte, wobei der Lichtstrahl an jeder Phasengrenze teilweise reflektiert und teilweise transmittiert wird. Die unterschiedliche Länge der zurückgelegten Wege von Teilstrahlen des Lichts führen zu Gangunterschieden und damit zu relativen Phasenverschiebungen. Bei der Überlagerung der partiell reflektierten Teilstrahlen resultiert ein Interferenzeffekt. Die Detektion des Interferenzmusters kann z.B. nach Wellenlängen aufgelöst erfolgen.

Der hier verwendete Begriff "Chromosomenstruktur" umfasst alle strukturellen und funktionellen Eigenschaften von Chromosomen als Träger der Erbinformation, d.h. die chemischen und morphologischen Strukturen in jedem Stadium des Chromosoms.

Die vorliegende Erfindung beruht auf spektralen bildgebenden Techniken, die abhängig vom Wellenlängenbereich in der Lage sind, sowohl morphologische als auch chemische Bestandteile eines Chromosomenpräparats durch dessen Interferenzeigenschaften abzubilden. Ohne durch irgendeinen speziellen Wirkmechanismus gebunden zu sein, nehmen die Erfinder der vorliegenden Erfindung an, dass die Interferenzeigenschaften des Chromosomenpräparats durch die verschiedenen lokalen geometrischen Schichtdicken je Chromosom sowie die verschiedenen Brechungsindizes von DNA, Protein und Substrat als auch durch die helikale DNA Struktur in Form von cholesterischen Phasen zustande kommen.

Werden Chromosomenpräparate in diffuser Reflexion oder diffuser Transmission betrachtet, ergibt sich durch Interferenz vorzugsweise im sichtbaren Bereich überraschenderweise ein spezifisches, farbiges gebändertes Profil. Im UV und Infrarotbereich kann durch Interferenz ein räumlich hochspezifisches lokales Spektralmuster oder ein für das jeweilige Chromosom charakteristische globale Spektrum dargestellt werden. Diese erfindungsgemäße Visualisierung eines gebänderten Profils von Chromosomen ermöglicht eine neuartige Chromosomenklassifikation, die alle Vorteile des erfindungsgemäßen Verfahrens aufweist.

Das erfindungsgemäße Verfahren bietet den Vorteil, dass das Chromosomenpräparat nicht gefärbt wird, sondern an ungefärbten Chromosomenpräparaten durchgeführt wird. Somit kann die Chromosomenstruktur unabhängig von variablen Faktoren, wie der Färbequalität, dem Kondensationsgrad und der Spreitung der Chromosomen charakterisiert werden. Diese variablen Faktoren, welche die Zuverlässigkeit und Aussagekraft von Messdaten vermindern, werden beim Analysieren der Chromosomenstruktur ausgeschlossen.

Ein weiterer Vorteil des erfindungsgemäßen Verfahrens liegt darin, dass keine Informationen über die Spektren der reinen Bestandteile der Chromosomen, d.h. der DNA oder dem Protein, vorliegen müssen. Die Spektren der reinen Bestandteile werden aus gemischten Spektren berechnet. Somit lassen sich auch Aussagen über die verschiedenen DNA- und Proteinkonzentrationen der einzelnen Chromosomen treffen.

Ferner können durch das erfindungsgemäße Verfahren Chromosomenpräparate schnell analysiert werden, da ein zeitintensives Färben der Chromosomen und eine ebenso zeitintensive Analyse der Chromosomenbänderung überflüssig sind. Außerdem lässt sich die Analyse der Interferenzeigenschaften von Chromosomenpräparaten sehr gut automatisieren und Computer gesteuert durchführen. Somit lässt sich ein Chromosomenscreenen mit hohem Durchsatz realisieren. Zudem ist das erfindungsgemäße Verfahren einfach anzuwenden und erfordert keine Kenntnis der Chromosomenbänderung.

Das erfindungsgemäße Verfahren ermöglicht es, morphologische und chemische Veränderungen, wie Polymorphismen oder Deletionen, sowohl quantitativ als auch qualitativ mit einer hohen spektralen Auflösung darzustellen. Durch das erfindungsgemäße Verfahren werden die Grenzen der klassischen zytogenetischen Diagnostik überwunden und eine verfeinerte Strukturanalyse der Chromosomen möglich.

Das erfindungsgemäße Verfahren findet daher in der prä- und postnatalen Diagnostik ebenso wie in der Krebsdiagnostik Anwendung, indem es chromosomale Abweichungen, wie das Down Syndrom oder Fehlbildungen der Geschlechtschromosomen darstellt.

Das erfindungsgemäße Verfahren kann vor oder nach Techniken zur Chromosomenanalyse aus dem Stand der Technik, wie FISH oder SKY, durchgeführt werden, um z.B. Färbetechniken und spektrale Verfahren zu kombinieren. Es kann auch mit weiteren spektroskopischen und mikroskopischen Verfahren zur Chromosomenanalyse kombiniert werden, wie z.B. der Rasterkraftmikroskopie.

In einer vorteilhaften Ausführungsform wird im erfindungsgemäßen Verfahren mindestens eine optische Eigenschaft des Chromosomenpräparats gemessen. Diese Messung kann zusätzlich zur Messung der Interferenzeigenschaft erfolgen.

Der hier verwendete Begriff "optische Eigenschaft" bezeichnet alle optischen und spektralen Eigenschaften und Erscheinungen, die durch Licht und durch Wechselwirkung von Licht mit Materie begründet werden, mit Ausnahme der Interferenz. Der Begriff "Licht" bezeichnet jede elektromagnetische Strahlung ohne eine Beschränkung auf einen bestimmten Wellenlängenbereich. Vorzugsweise wird die Erfindung in Wellenlängenbereichen zwischen einem UV/VIS Bereich und einem mittleren Infrarotbereich durchgeführt. Die optischen Eigenschaften umfassen sowohl die Wellennatur als auch die Teilchennatur des Lichts.

Durch eine Kombination der Messung von Interferenzeigenschaften und optischen Eigenschaften kann eine Vielzahl von Messvariablen ermittelt werden, die in Kombination Aussagen ermöglichen, die über die Aussagekraft der einzelnen Messungen hinausgehen. Die Messung einer weiteren optischen Eigenschaft, wie z.B. Absorption bringt chemische und morphologische Zusatzinformationen über die Chromosomenstruktur.

Die Interferenzeigenschaften des Chromosomenpräparats werden durch ein Messen spektraler Eigenschaften ermittelt.

In einer weiteren vorteilhaften Ausführungsform wird die Eigenschaft des Chromosomenpräparats aus der Gruppe ausgewählt, bestehend aus Interferenzmuster, Intensität in Abhängigkeit einer Wellenlänge und spektraler Karyotypisierung.

Der hier verwendete Begriff "Interferenzmuster" bezeichnet sowohl Farb- als auch Formmuster mit Graustufen von Weiß bis Schwarz, die auf Interferenz beruhen. Sie entstehen bei der Überlagerung von Wellen.

Durch Messung der Intensitätsverteilung in Abhängigkeit der Wellenlänge können auch Aussagen über die Größe der Chromosomen getroffen werden.

Der hier verwendete Begriff "spektrale Karyotypisierung" bezeichnet das Erstellen eines Karyogramms, das auf den optischen Eigenschaften des Chromosomenpräparats beruht und die Chromosomen kategorisiert und charakterisiert. Vorteile der spektralen Karyotypisierung sind die hohe Auflösung sowie die schnelle und einfache Durchführung, wodurch geringe chromosomale Abweichungen sowohl in der prä- und postnatalen Zytogenetik als auch in der Tumorzytogenetik festgestellt werden können.

In einer besonders bevorzugten Ausführungsform ist das Interferenzmuster ein globales und/oder lokales Interferenzmuster. Ein lokales Interferenzmuster beschränkt sich auf einen definierten Bereich eines Chromosoms, wodurch sich ein räumlich spezifisches Interferenzmuster ergibt, z.B. ein Riffelmuster. Diese lokalen Interferenzmuster spiegeln die Bänderungsstruktur der Chromosome sehr detailliert wider, was Rückschlüsse auf die unterschiedlichen Schichtdicken im Chromosom zulässt. Ein globales Interferenzmuster ist ein Interferenzmuster eines gesamten Chromosoms, wobei die Messblende so eingestellt wird, dass das vollständige Chromosom erfasst und ein Gesamtspektrum des Chromosoms gemessen wird. Durch die Lage des Gesamtspektrums, wie z.B. des Maximums und der beiden Flanken, können die Chromosomen als Gruppen identifiziert werden und deren Morphologie, wie z.B. die Lage der Zentromerregion als metazentrisch, submetrazentisch oder telozentrisch, beschrieben werden.

In einer weiteren Ausführungsform werden die Interferenzeigenschaft und/oder die optische Eigenschaft des Chromosomenpräparats in einem Modus gemessen, der aus der Gruppe ausgewählt ist, bestehend aus Transmissionsmodus, Reflexionsmodus, Polarisationsmodus, Absorptionsmodus, Anregungsmodus und Emissionsmodus.

Der Begriff "Transmissionsmodus" bezeichnet einen Modus, bei dem Licht analysiert wird, das Materie gerichtet oder diffus, insbesondere in einem Winkel zwischen 0° und 90°, durchquert hat. Somit werden von dem Begriff "Transmissionsmodus" sowohl der winkelabhängige diffuse als auch der gerichtete Transmissionsmodus umfasst. Der Begriff "Reflexionsmodus" bezeichnet einen Modus, bei dem Licht analysiert wird, welches von Materie gerichtet oder diffus, insbesondere in einem Winkel zwischen 90° und 180°, zurückgeworfen wurde. Somit sind von dem Begriff "Reflexionsmodus" sowohl der winkelabhängige diffuse als auch der gerichtete Reflexionsmodus umfasst. Der Begriff "diffuse Reflexion" bezeichnet eine Reflexion bei einer großen Rauhigkeit relativ zur Wellenlänge, die zu Streuung führt. Der Begriff "gerichtete Reflexion" bezeichnet die Reflexion, bei der das Licht an der Oberfläche mit Einfallswinkel = Ausfallswinkel gespiegelt wird. Der Begriff "Polarisationsmodus" bezeichnet einen Modus, bei dem Wellen annähernd gleich ausgerichtet werden. Der Begriff "Absorptionsmodus" bezeichnet einen Modus, bei dem das Maß oder das Vorhandensein von Lichtaufnahme ermittelt wird. Der Begriff "Anregungsmodus" bezeichnet einen Modus, bei dem eine Anregung, z.B. eines Fluorophors stattfindet und detektiert wird. Der Begriff "Emissionsmodus" bezeichnet einen Modus, bei dem das Maß oder das Vorhandensein von einer Lichtaussendung ermittelt wird. Jeder Modus ist bei unterschiedlicher Wellenlänge spektral zerlegt.

Ferner werden verschiedene Aufzeichnungsmodi verwendet, um Interferenzeigenschaften des Chromosomenpräparats zu messen. Beispiele für spektrale, bildgebende Verfahren sind Whiskbroom Kartierung, Staring als ein 2D-Wellenlängenscannen und Pushbroom als Linien-scannen mit spektraler Zerlegung, computertomografische Bildspektrometrie und konfokale Mikroskopie. Weitere Möglichkeiten zur Messung von Interferenzen sind Ellipsometrie, optische Kohärenztomographie, Speckle-Interferometrie, Weiß-lichtinterferometrie, Reflexionsanisotropie Spektroskopie, winkelabhängige Messungen sowie alle anderen Verfahren zur Messung von Interferenzen.

Bei der Whiskbroom Kartierung werden Bildbereiche punktweise abgetastet, d.h. punktuell beleuchtet und detektiert. Somit tragen keine umliegenden Bereiche zur Absorption bei, so dass auch kleine Absorptionsunterschiede sichtbar gemacht werden können. Ein Vorteil dieser erfindungsgemäßen Ausführungsform ist die hohe spektrale Auflösung.

Beim Staring Verfahren werden komplette zweidimensionale Bilder aufgenommen, wobei die Wellenlänge zwischen den Aufnahmen variiert wird. Die Wellenlängenselektion kann auf verschiedene Weise erfolgen. Sowohl für das Staring Verfahren als auch das erfindungsgemäße Verfahren im Allgemeinen eignen sich besonders Filterräder, linear variierbare Filter, wie elektrisch variierbare Filter oder bildgebende Interferometer, falls Fourier-Transformationen notwendig sind.

Beim Pushbroom Verfahren wird das Objekt über einen Spalt auf eine "Prism-Grating-Prism" optische Anordnung abgebildet. Dabei wird das Licht in der zweiten Achse, d.h. der Wellenlänge spektral zerlegt und auf der Kamera abgebildet. Um die zweite Raumkoordinate zu integrieren, muss das Objekt bewegt werden. Diese Anordnung ist besonders für online und inline Analysen geeignet.

In einer besonders bevorzugten Ausführungsform wird der diffuse Reflexionsmodus verwendet, der sich insbesondere dazu eignet die spektralen Eigenschaften und Interferenzeigenschaften von Chromosomenpräparaten zu messen. In diesem Modus wird die Chromosomenstruktur sehr spezifisch als ein gebändertes Profil dargestellt.

In einer weiteren Ausführungsform wird mindestens ein Parameter aus der Eigenschaft des Chromosomenpräparats bestimmt.

Der Begriff "Parameter" bezeichnet Variablen, die durch mindestens einen Rechenschritt, wie das Bilden der ersten Ableitung, aus den gemessenen Interferenz- und optischen Eigenschaften von Chromosomenpräparaten ermittelt werden. Die Parameter liefern dadurch erweiterte Informationen über die Chromosomenstruktur.

In einer vorteilhaften Ausführungsform werden die Parameter aus der Gruppe ausgewählt, bestehend aus Transmissionskoeffizient, Reflexionskoeffizient, Absorptionskoeffizient und Streukoeffizient.

Der hier verwendete Begriff "Transmissionskoeffizient" ist ein Maß für die Abschwächung des Lichts, das durch das Medium und/oder das Chromosomenpräparat, d.h. das Hindernis, hindurch tritt. Er ist definiert als das Verhältnis der durch ein Objekt durchtretenden Strahlungsintensität zur einfallenden Strahlungsintensität. Es handelt sich um die Differenz der ursprünglichen Lichtmenge abzüglich Absorption, Streuung und Reflexion.

Der hier verwendete Begriff "Reflexionskoeffizient" ist ein Maß für die reflektierte Intensität, d.h. für das Verhältnis zwischen reflektiertem und einfallendem Strahlungsfluss. Er lässt sich mit Hilfe der Fresnel'schen Formeln berechnen.

Der hier verwendete Begriff "Absorptionskoeffizient", auch Absorptionskonstante genannt, ist ein Maß für die Stärke der Absorption. In der Optik stellt er den Imaginärteil der komplexen Brechungszahl dar.

Der hier verwendete Begriff "Streukoeffizient" ist ein Maß für die gestreute Intensität. Der Streukoeffizient bezeichnet den Anteil des Lichtes, der innerhalb eines teiltransparenten Mediums, wie einer Partikelwolke, ohne Absorption pro Distanzeinheit gestreut wird.

Zusätzlich zu den Koeffizienten können auch ein Transmissionsgrad, ein Reflexionsgrad, ein Absorptionsgrad, ein Polarisationsgrad und Streugrad als Anisotropie-Parameter berechnet werden.

Die Eigenschaft und/oder Parameter des Chromosomenpräparats werden mit mindestens einer multivariaten Technik analysiert.

Der Begriff "multivariate Technik" bezeichnet eine Technik, die nicht eine Variable isoliert, sondern das Zusammenwirken mehrerer Variablen zugleich und ihre Abhängigkeitsstruktur analysiert. Multivariate Techniken lassen sich in Strukturprüfende Verfahren, wie Varianzanalyse oder Strukturgleichungsmodelle, und Struktur-entdeckende Verfahren, wie neuronale Netze, Faktorenanalyse und Hauptkomponentenanalyse gliedern.

Durch das erfindungsgemäße Verfahren mit mindestens einer multivariaten Technik werden große Datenmengen in kurzer Zeit, z.B. einige Megabyte pro Millisekunde, mit überlagernden Informationen von z.B. Absorption und Streuung erzeugt. Insofern spielt die Verdichtung der Daten auf die wesentlichen Informationen sowie der Ausschluss von überflüssigen Informationen eine große Rolle. Dies kann durch multivariate Techniken erreicht werden, so dass eine Informationsverdichtung oder auch Datenreduktion der Originaldaten erreicht wird.

Aus einer großen Zahl von Messwerten und Variablen werden dabei die relevanten Informationen herausgefunden.

Ein Ziel z.B. der Hauptkomponentenanalyse ist es, sich einer Vielzahl von Messwerten oder Spektren durch eine geringere Zahl möglichst aussagekräftiger Linearkombinationen, die Hauptkomponenten, zu nähern. Messwerte oder Spektren werden in der Hauptkomponentenanalyse entsprechend einer maximalen Varianz zusammengefasst, da die Varianz ein Maß für den Informationsgehalt darstellt. Die Daten liegen in der Hauptkomponentenanalyse als Punktwolke in einem n-dimensionalen Koordinatensystem vor. In diese Punktwolke wird ein neues Koordinatensystem gelegt, das rotiert wird. Eine erste Achse wird so durch die Punktwolke gelegt, dass die Varianz der Daten in die Richtung dieser Achse maximal ist. Eine zweite Achse steht auf der ersten Achse senkrecht. In ihrer Richtung ist die Varianz am zweitgrößten. Für n-dimensionale Daten gibt es also grundsätzlich n viele Achsen, die zueinander orthogonal stehen. Die Gesamtvarianz der Daten ist die Summe dieser "Achsenvarianzen". Diese Achsen werden durch Faktoren repräsentiert, die den relevanten Informationsgehalt der Daten repräsentieren. Häufig können die Faktoren inhaltlich nicht eindeutig interpretiert werden.

Durch die Hauptkomponentenanalyse der Eigenschaften und/oder Parameter des Chromosomenpräparats ergibt sich eine Klassifizierung der Chromosomen. Die verschiedenen Hauptkomponenten liefern Informationen und Hintergründe, warum sich bestimmte Chromosome in einer Klasse befinden. Aus den Hauptkomponenten erhält man Informationen über nicht direkt messbare Parameter, wie z.B. Größe, Form, Lage der Zentromerregion, Bänderung, DNA-und/oder Proteingehalt. Diese Informationen können genutzt werden, um Aussagen über Variabilitäten mit z.B. heterochromatischen Bereichen einzelner Chromosomen zu treffen. Die Modelle der multivariaten Datenanalyse können dann zur Vorhersage unbekannter Chromosomen mit Aberrationen verwendet werden. Je nach Modell erhält man die Klassenzugehörigkeit oder einen oder mehrere Werte für die Zielgrößen, für die das Modell aufgestellt wurde.

Zusätzlich werden durch die Kombination des erfindungsgemäßen Verfahrens mit einer multivariaten Technik Aussagen möglich, die sich durch Verfahren aus dem Stand der Technik nicht ergeben. Mit Hilfe der multivariaten Kurvenauflösung können z.B. Mischungsspektren in Basisspektren zerlegt werden. Folglich können die Spektren der reinen Bestandteile der Chromosomen, also DNA und Protein, aus dem Mischungsspektrum eines gemischten Präparats, wie dem Chromosomenpräparat, berechnet werden. Daraus lassen sich Aussagen über die verschiedenen DNA- und Proteinkonzentrationen der einzelnen Chromosomen treffen.

Ferner kann durch die multivariate Technik ein neues Klassifizierungsmodell für die Chromosomen des Menschen oder anderer Spezies entwickelt werden, ohne dass ein Anfärben erforderlich ist. Hierfür fließen Eigenschaften und Parameter des Chromosomenpräparats, wie die Absorptions- und/oder Reflexionseigenschaften der DNA- und Proteinanteile im UV Bereich, die DNA Orientierung oder die Schichtdicken im VIS Bereich, in die multivariate Analyse ein und dienen einer schnellen, zuverlässigen und automatisierbaren spektralen Karyotypisierung und Klassifizierung. Diese Klassifizierung wurde durch Verfahren aus dem Stand der Technik verifiziert.

In einer besonders vorteilhaften Ausführungsform ist die multivariate Technik eine Hauptkomponentenanalyse oder ein Mustererkennungsverfahren.

Die Hauptkomponentenanalyse ist ein Verfahren der multivariaten Statistik, das dazu dient, umfangreiche Datensätze zu strukturieren und zu veranschaulichen, indem eine Mehrzahl statistischer Variablen durch eine geringere Zahl möglichst aussagekräftiger Linearkombinationen, die "Hauptkomponenten", genähert wird.

In Mustererkennungsverfahren werden gemessene Signale automatisch in Kategorien eingeordnet. Zentraler Punkt ist dabei das Erkennen von Mustern, d.h. den Merkmalen, die einer Kategorie gemeinsam sind und die sie vom Inhalt anderer Kategorien unterscheiden.

Mehr-Wege-Verfahren, wie die N-Way multivariate Daten Analyse, die parallele Faktorenanalyse oder die multivariate Kurvenauflösung, sind für die Analyse von Chromosomenpräparaten besonders geeignet, da die Daten hochdimensional vorliegen. Insbesondere die multivariate Kurvenauflösung erlaubt die Datenverdichtung im N-dimensionalen Raum. Durch die Integration von Nebenbedingungen, wie z.B. Positiv-Spektren, und die Integration von Vorwissen lassen sich sehr schnell kalibrationsfrei Modelle erzeugen, deren latente Variable sich zudem noch leicht interpretieren lassen.

Die Chromosomenstruktur kann eine chemische und/oder morphologische Chromosomenstruktur sein. Der Begriff "chemische Chromosomenstruktur" bezeichnet die molekulare Struktur der Chromosomen, wie die Konzentrationen von DNA und Protein oder die Anordnung von Makromolekülen und Deletionen. Der Begriff "morphologische Chromosomenstruktur" bezeichnet die mikroskopische und makroskopische Struktur und Gestalt der Chromosomen, wie Chromosomengröße, Chromosomendicke, Chromosomenaberrationen, Chromosomentopologie, gebändertes Profil und Schichtdicken.

Die Eigenschaften des Chromosomenpräparats werden in einem spektralen Bereich von 180 nm bis 25.000 nm gemessen. Der UV Bereich von ungefähr 180 nm bis ungefähr 400 nm ist besonders dazu geeignet, die chemische Struktur der Chromosomen zu analysieren und die Spektren von DNA und Protein getrennt darzustellen. Der VIS Bereich von ungefähr 400 nm bis ungefähr 700 nm ist besonders geeignet, die Bänderung der Chromosomen, also die morphologische Chromosomenstrukturen darzustellen. Zudem sind Messungen im VIS Bereich äußerst preisgünstige Ausführungsformen. Der nahe Infrarotbereich von ungefähr 700 nm bis ungefähr 3000 nm und der mittlere Infrarotbereich von ungefähr 3000 nm bis ungefähr 25.000 nm sind besonders geeignet, die chemische Chromosomenstruktur zu analysieren.

In einer Ausführungsform werden die Interferenzeigenschaften des Chromosomenpräparats mittels Nahfeldmikroskop gemessen. In einer bevorzugten Ausführungsform wird eine Festkörper Immersionslinse am Mikroskop verwendet. Dadurch werden die Interferenzeigenschaften und die optischen Eigenschaften der Chromosomen mit einer hohen lateralen Auflösung gemessen. Diese Auflösung kann deutlich kleiner als 30 nm sein, sodass beispielsweise Chromatideigenschaften, sowie Mikrodeletionen oder Translokationen detektiert werden können. Vorzugsweise liegt die Auflösung im Bereich von ≤ 30 nm, weiter bevorzugt bei etwa 20 - 30 nm, am meisten bevorzugt bei etwa 25 nm.

Der hier verwendete Begriff "Nahfeldmikroskop" bezeichnet ein Mikroskop, mit welchem im Nahfeld gearbeitet werden kann (WO 98/58288). Das Nahfeld ist der Bereich, der unterhalb des Beugungslimits des Mikroskops liegt. Charakteristisch für das Nahfeld ist, dass nur ein Teil der dort vorhandenen elektromagnetischen Energie von der Quelle wegpropagiert wird, wie beim Fernfeld, während der Rest um die Quelle bzw. die Antenne fluktuiert. Dieses lokalisierte elektromagnetische Feld, auch als evaneszentes Feld bezeichnet, wird in der nahfeldoptischen Mikroskopie genutzt, wobei sich das Detektionsmittel innerhalb des Nahfelds befindet.

In einer bevorzugten Ausführung wird eine Festkörper Immersionslinse am Mikroskop verwendet. Die Festkörper Immersionslinse optimiert den optischen Durchsatz und damit die optische Spektroskopie im Nahfeld. Die Verwendung der Festkörper Immersionslinse im Nahfeld ermöglicht eine mehrdimensionale Fluoreszenzspektroskopie, welche bei der Einzelmoleküldetektion vorteilhaft ist. Mit Hilfe der mehrdimensionalen Fluoreszenzspektroskopie können Verbindungen spektroskopisch bzw. zerstörungsfrei voneinander getrennt werden, wenn die unterschiedlichen Emissionsspektren bei unterschiedlichen Anregungsfrequenzen aufgenommen werden. Dabei wird ein 3D-Bild der verschiedenen Spektren erzeugt, wobei sich die Anregungsmaxima und Emissionsmaxima der unterschiedlichen Moleküle deutlich unterscheiden lassen.

Der Vorteil dieses erfindungsgemäßen Verfahrens liegt in der hohen lateralen Auflösung, mit welcher Mikrodeletionen oder Translokationen von ungefärbten Chromosomen genauer identifizieren zu können.

Mit dem erfindungsgemäßen Verfahren können die Interferenzeigenschaften des Chromosomenpräparats im Reflexions-Nahfeld-Modus gemessen werden, wobei eine positive Abbildung der Chromosomen generiert wird. Die Interferenzeigenschaften des Chromosomenpräparats können auch im Photonentunnel-Nahfeld-Modus gemessen werden, wobei eine negative Abbildung der Chromosomen generiert wird.

Der Begriff "Reflexions-Nahfeld-Modus" bezeichnet einen Modus, in dem die Interaktion des auf der Probe lokalisierten evaneszenten Feldes mit der Festkörper Immersionslinse detektiert wird. Das strahlungslose Feld kann in einem dielektrischen Medium einkoppeln und dann in der Linse weiterpropagieren. Das reflektierte Nahfeld wird über eine Messfeldblende im Fernfeld detektiert und erzeugt eine positive Abbildung. Der Begriff "Photonentunnel-Nahfeld-Modus" bezeichnet einen Modus, in dem die Fokusebene in der Linse so eingestellt ist, dass das Licht im Winkel der Totalreflexion auf die Spitze trifft. Damit entsteht das evaneszente Feld um die Festkörper Immersionslinse. Durch Annähern des Feldes an die Probe tunneln Photonen in die Probe und führen zu einem Verlust im reflektierten Licht in der Linse. Die Intensitätsabnahme kann direkt im Fernfeld detektiert werden. Diese Bildgebung erzeugt eine negative Abbildung (Merz und Kessler, 2007).

In einer weiteren Ausführungsform wird mit dem erfindungsgemäßen Verfahren im Nahfeld gemessen, wobei spektroskopische Verfahren, welche UV-VIS-NIR-IR, Fluoreszenz (Caspersson et al. 1967), oder Raman umfassen, aber nicht auf diese beschränkt sind, integriert werden. Dadurch werden charakteristische, chemische und morphologische Parameter jedes Chromosoms erfasst.

In einer weiteren Ausführung kann das erfindungsgemäße Verfahren im Nahfeld durchgeführt und mit Spektroskopie und der FISH Technik im Fernfeld kombiniert werden. Dadurch werden schnelle Screening Möglichkeiten und hochauflösende Messungen verbunden.

In einer besonders bevorzugten Ausführungsform werden die spektralen Eigenschaften der Chromosomen im Nahfeld gemessen. Die Nahfeldspektren besitzen, resultierend aus den evaneszenten Feldern, einen anderen Informationsgehalt als die Fernfeldspektren und sind nicht direkt mit den bekannten Fernfeldspektren vergleichbar. Im Fernfeldspektrum wird die Information als Summe der überlagerten Interferenzen gemessen. Der Unterschied in den Nahfeldspektren resultiert dabei aus der lateral lokal aufgelösten Messstelle.

In einer Ausführungsform wird das erfindungsgemäße Verfahren mit einer Rasterkrafttechnik kombiniert, vorzugsweise ausgewählt aus der Gruppe bestehend aus Rastersondenmikroskopie, Atomkraftmikroskopie, Rasternahfeldmikroskopie, optische Rasternahfeldspektroskopie und Nahfeldspektroskopie (Oberringer et al. 2003).

In einer besonders bevorzugten Ausführungsform wird ein Nahfeldmikroskop mit einer Festkörper Immersionslinse zur Analyse von ungefärbten Chromosomen verwendet.

### Beschreibung der Beispiele und Ausführungsformen

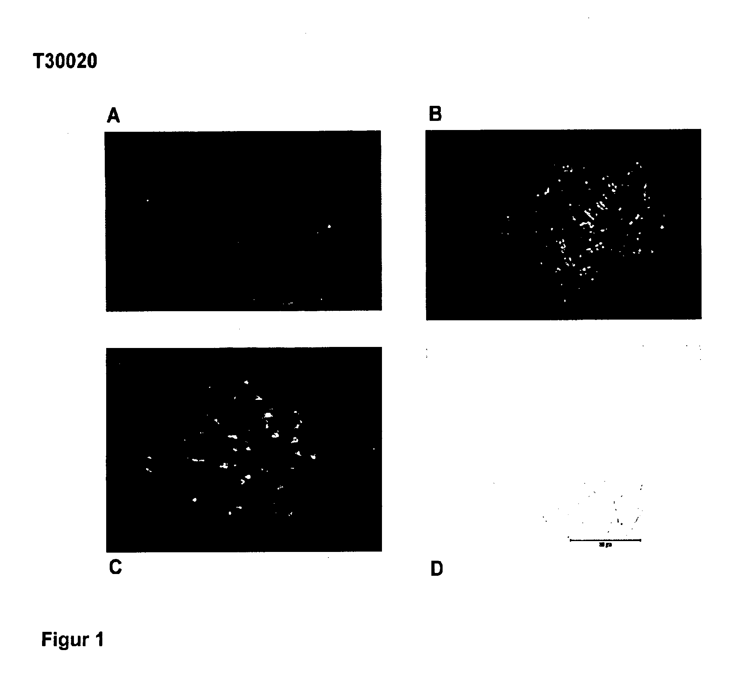

In Figur 1A bis D ist je ein ungefärbter Chromosomensatz auf unterschiedlichen Materialien und Messanordnungen dargestellt.
A: Präparation auf Glas, Auflicht-Dunkelfeld (Reflexionanordnung 45/0)
B: Präparation auf Si-Wafer, Auflicht-Dunkelfeld (Reflexionanordnung 45/0)
C: Präparation auf Gold, Auflicht-Dunkelfeld (Reflexionanordnung 45/0)
D: Präparation auf Gold, Auflicht-Hellfeld (Reflexionanordnung 0/0)

Auffallend ist für alle Dunkelfeld Abbildungen das spezifische Farbprofil, welches für jedes Chromosom vorhanden ist. Dieses lässt sich auf unterschiedliche Schichtdicken, Brechungsindizes und Orientierungen der chromosomalen DNA zurückführen.

### 1. Darstellung von Chromosomen durch eine Whiskbroom Kartierung

In einer erfindungsgemäßen Ausführungsform wurde der gesamte Chromosomensatz punktweise durch eine Whiskbroom Kartierung vermessen. Hierbei wurde an jedem Ort in x- und y-Richtung ein komplettes Spektrum im bevorzugten Wellenlängenbereich erfasst. Vorzugsweise wurde nur ein Einzeldetektor, wie z.B. ein Photomultiplier oder ein Dioden-Array-Detektor verwendet. Der Bildaufbau erfolgte sequenziell durch Zusammenfügen vieler Messpunkte. Neben einer hohen spektralen Auflösung ließ sich bis zur Beugungsbegrenzung eine detaillierte ortsaufgelöste analytische Charakterisierung durchführen.

### 1.1 Giemsa gefärbte Chromosomen

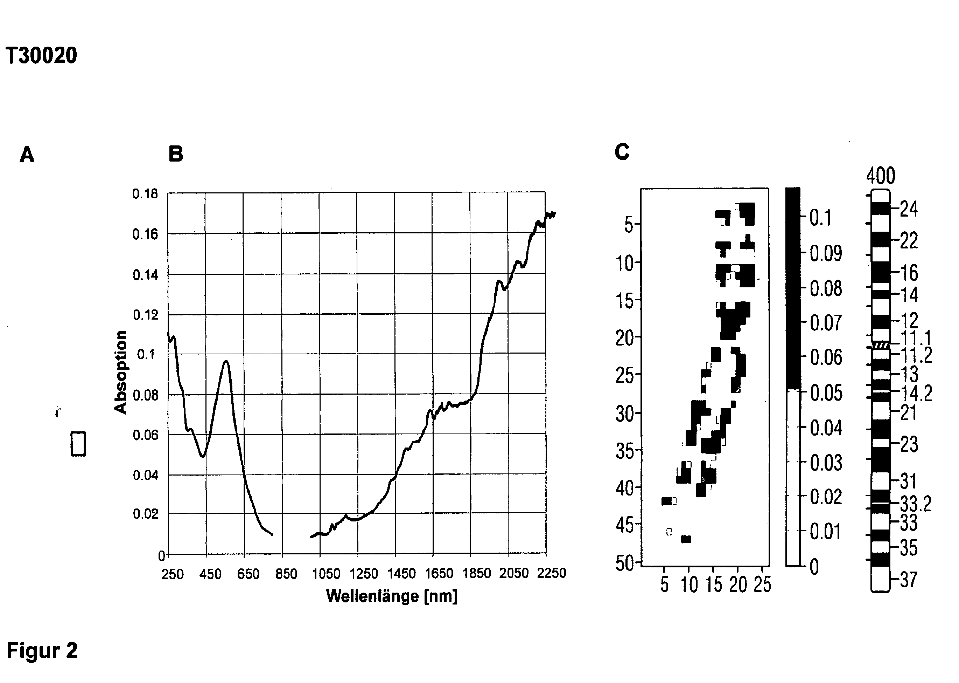

In Figur 2 ist ein UV-VIS-Nahes Infrarot (NIR) Spektrum des GTG gebänderten Chromosom Nr. 2 zu sehen. Der markierte Bereich in Figur 2A stellt den Ausschnitt der verwendeten Messfeldblende dar und beträgt in der Bildebene ca. 0,5 µm. Die Blende wurde dabei so platziert, dass diese eine dunkle G-Bande einschließt. Figur 2B zeigt ein Absorptionsspektrum über Wellenlängen im UV/VIS

Bereich und NIR Bereich des in Figur 2A markierten Chromosomenausschnitts. Figur 2C zeigt die spektrale Verteilung bei 550 nm in Absorption, wobei jeder einzelner Pixel mit einer geometrischen Auflösung von 250 nm und einer spektralen Auflösung von 1 nm aufgenommen ist. Die dunklen Pixelbereiche spiegeln Regionen mit hoher Absorption für den Giemsa Farbstoff wider und entsprechen dabei dem schematischen gebänderten Profil für Chromosom Nr. 2.

Ein Vorteil des Beispiels im Gegensatz zu bildgebenden Verfahren im Stand der Technik liegt in der punktuellen Beleuchtung und Detektion jedes Pixels. Da keine umliegenden Bereiche zur Absorption beitragen, können auch kleine Absorptionsunterschiede sichtbar gemacht werden. Einen weiteren Vorteil dieser erfindungsgemäßen Ausführungsform stellt die hohe spektrale Auflösung dar, die jedoch zur Beschreibung des gesamten Chromosomensatzes viel Zeit in Anspruch nimmt. Dies zeigt sich besonders deutlich durch einen Vergleich mit einem Ideogramm in Figur 2D, wobei jede Bande direkt zugeordnet werden kann. So lassen sich für jede Wellenlänge, auch im nahen Infrarot, spektrale Verteilungsbilder erzeugen, die für jedes Chromosom charakteristisch sind.

### 1.2 Darstellung ungefärbter Chromosomen durch VIS Messungen in Reflexion

Bei den Messungen an ungefärbten Chromosomen wurde für jedes Chromosom ein Reflexionsspektrum aufgenommen. Dabei wurde die Messfeldblende so eingestellt, dass je Messvorgang nur ein Chromosom erfasst wurde. Aus 46 Chromosomen ergeben sich also 46 Einzelspektren. Da der Untergrund bei den Dunkelfeld Messungen schwarz ist, könnte die Messfeldblende nach einmaligem Abgleich mit z.B. Bariumsulfat als diffusem Streuer variiert werden, ohne dass das Untergrundrauschen zunimmt.

Aufgrund der Messanordnung und Geometrie ergaben sich für jedes Chromosom unterschiedliche rot-gelb-grüne Farbprofile. Bei Anwendung von Trypsin wird über die Zeit eine Abnahme der roten Farbanteile beobachtet, die zur Ausbildung von Farbstrukturen und spezifischen Profilen ähnlich einer Bänderung der Chromosomen führt. Bei zu langer Einwirkzeit kommt es zur Deformation der Chromosomen. Am Anfang der Versuchsreihe lag keine spezifische Bänderungsstruktur vor. Grund hierfür sind unspezifische Proteinumhüllungen, welche die eigentliche Struktur bedecken. Mit zunehmender Trypsinierung wurde die Bänderungsstruktur ausgeprägt und die unspezifische Proteinumhüllung nahm ab.

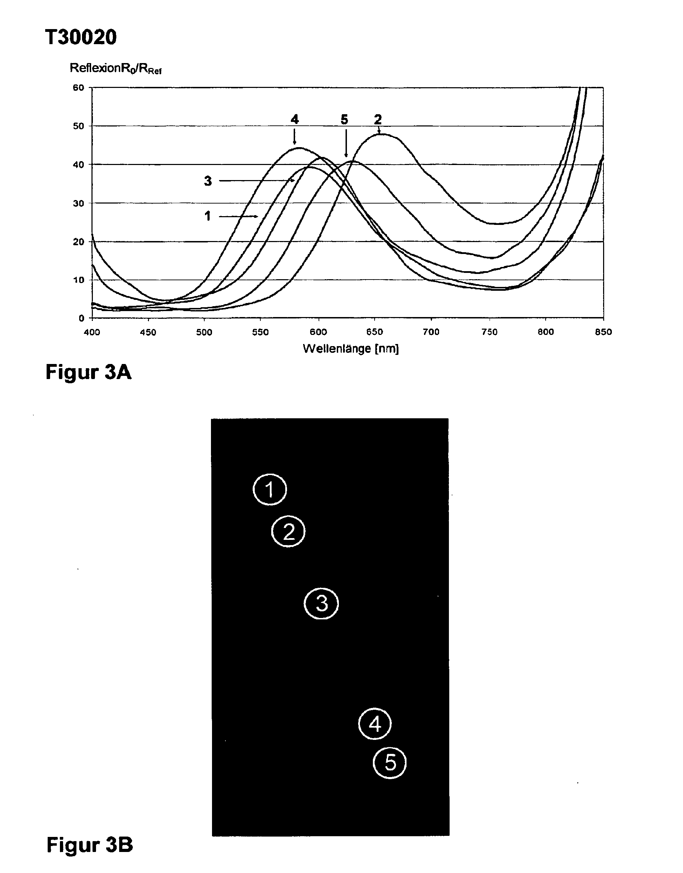

In Figur 3B ist Chromosom Nr. 2 zu sehen, das an fünf verschiedenen Punkten mit einem Blendendurchmesser von 0,5 µm vermessen worden ist. Es zeigt sich für den jeweiligen Bereich ein spezifisches Reflexionsspektrum (Figur 3A) basierend auf den bei unterschiedlichen Schichtdicken entstehenden Interferenzen. Ein Abgleich erfolgte mit Bariumsulfat.

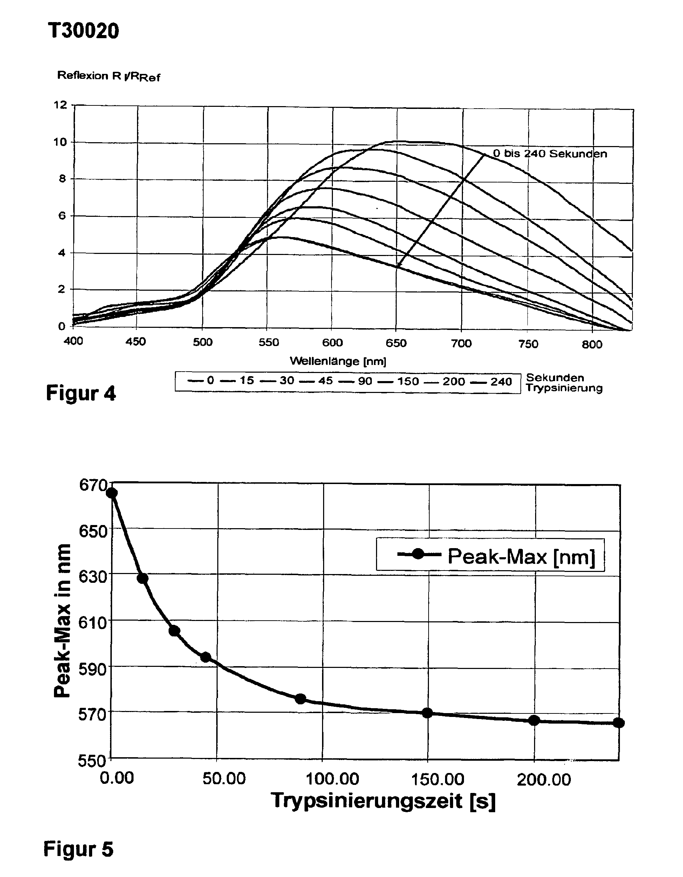

Im Gegensatz dazu ist in Figur 4 das Reflexionsspektrum des gesamten Chromosoms Nr. 2 zu sehen. Dabei wurde die Messfeldblende so eingestellt, dass pro Messvorgang das gesamte Chromosom erfasst wurde. Dabei ist zu erkennen, dass die einzelnen Interferenzen im Gesamtspektrum verloren gehen und in ein globales Spektrum übergehen. Weiterhin zeigten sich bei zunehmender Trypsinierungszeit eine Abnahme der Intensität und eine Veränderung des Maximums sowie des Flankenverhältnisses.

In Figur 5 ist die Peak-Maximum Verschiebung über die Trypsinierungszeit aufgetragen. Dabei zeigte sich, dass das Peak-Maximum über die Zeit variierte, was auf eine Reduzierung der Schichtdicke schließen lässt. Nach ca. 100 s wurde ein Gleichgewichtszustand erreicht, bei dem sich auch nach weiterer Trypsinierung nichts mehr änderte, wodurch der Endpunkt der Trypsinierung angezeigt wird. Danach folgte nur noch die Deformation der Chromosomen.

Nach einer geeigneten Trypsinierungszeit von ca. 100 s, die von der Enzymaktivität abhängt, wurde für jedes Chromosom ein Reflexionsspektrum aufgenommen. Hier wurde als Beispiel der Bereich zwischen 400 nm und 800 nm ausgewählt. Dabei wurde die Messfeldblende so eingestellt, dass pro Messvorgang nur ein Chromosom erfasst wurde. Der Abgleich der Probemessungen erfolgte mit Bariumsulfat.

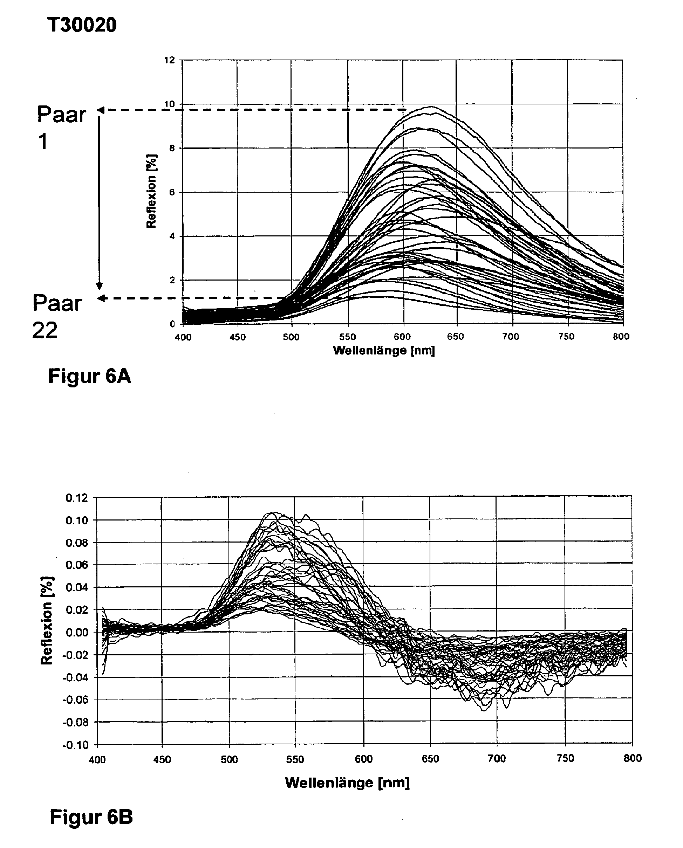

Aus Figur 6A zeigt sich, dass das diploide Chromosomenpaar Nr. 1 die höchste Reflexion und das diploide Chromosomenpaar Nr. 22 die geringste Reflexion aufweist. Damit in dem nachfolgenden Modell die Intensität und somit die Größe nicht der dominierte Faktor in den Daten ist, wurde die 1. Ableitung gebildet, wobei das Maximum zur Nullstelle und die Flanken betont wurden (Figur 6B). Dadurch zeigt sich deutlich, dass je Spektrum ein charakteristisches Riffelmuster vorhanden ist, welches auf die Bänderungsstruktur des jeweiligen Chromosoms zurückzuführen ist. In Verbindung mit der multivariaten Datenanalyse, die einige wenige latente Faktoren aus den vorbehandelten Spektren extrahiert, lässt sich ein Klassifizierungsmodell für die Chromosomenpaare entwickeln.

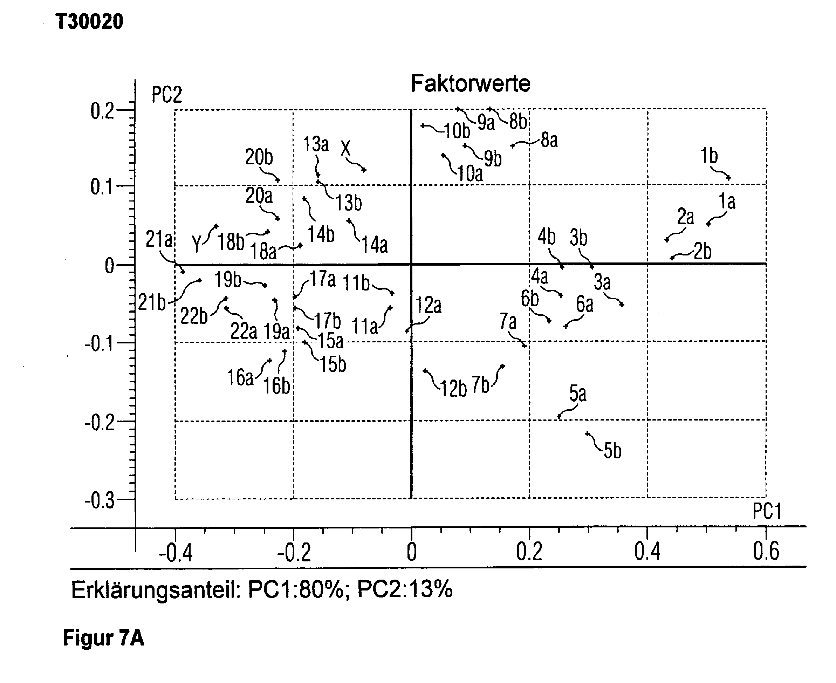

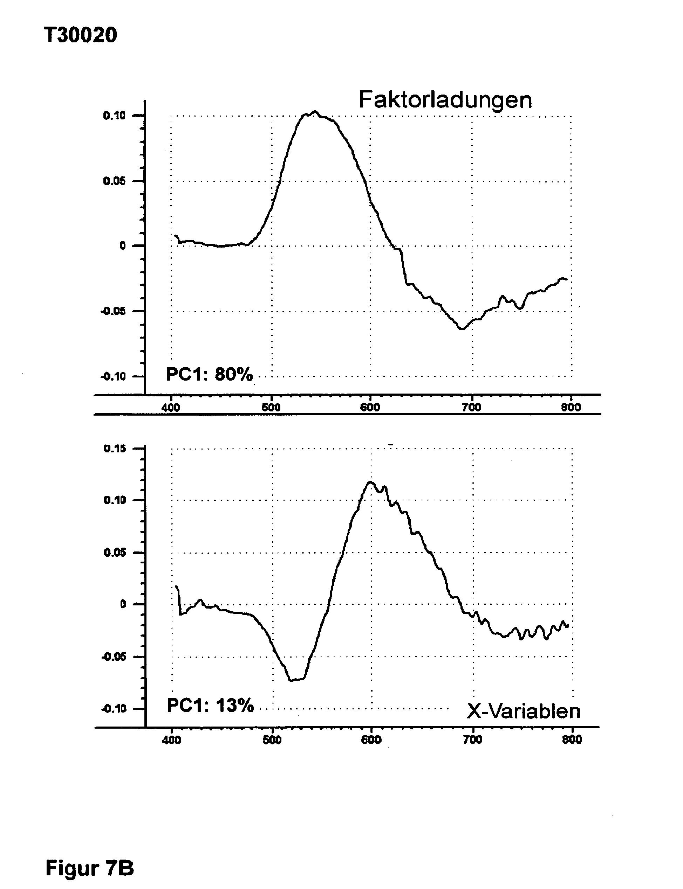

Das Modell einer Hauptkomponentenanalyse in Figuren 7A und 7B zeigt alle 46 Chromosome paarweise aufgetrennt. Die Verifizierung der Chromosomen Nummern wurde mit MFISH bestätigt.

### 1.3 Darstellung ungefärbter Chromosomen durch UV Messungen in Reflexion

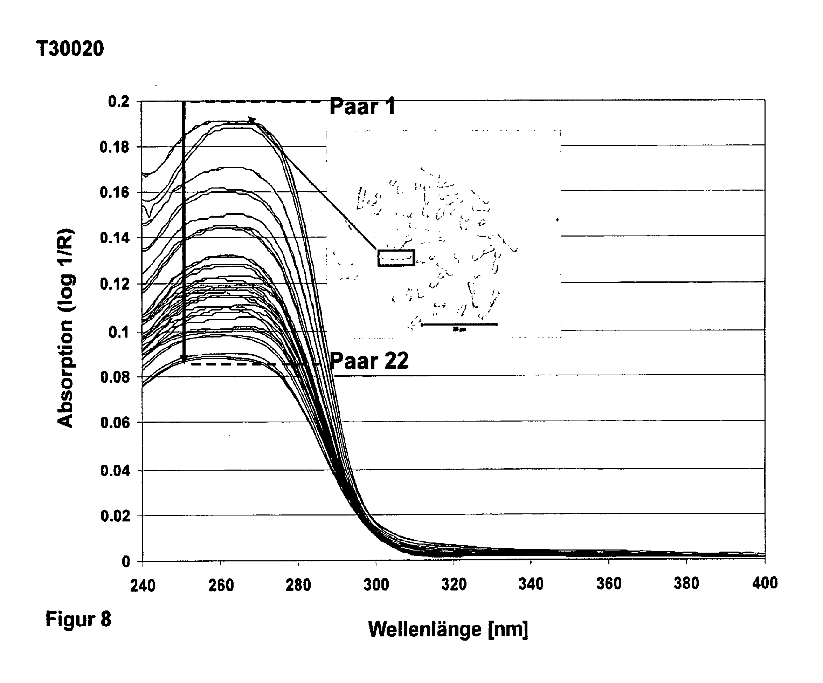

Für UV Messungen im Reflexionsmodus wurde für jedes Chromosom ein Reflexionsspektrum (Hellfeld-Auflicht) im Bereich von 240 nm bis 400 nm aufgenommen. Eine Messfeldblende muss nach erfolgtem Abgleich an einer Goldleerstelle konstant gehalten werden. Wird die Messfeldblende aufgrund der Chromosomengröße variiert, muss ein neuer Abgleich stattfinden. Auch wurde je Messvorgang nur ein Chromosom erfasst (Figur 8).

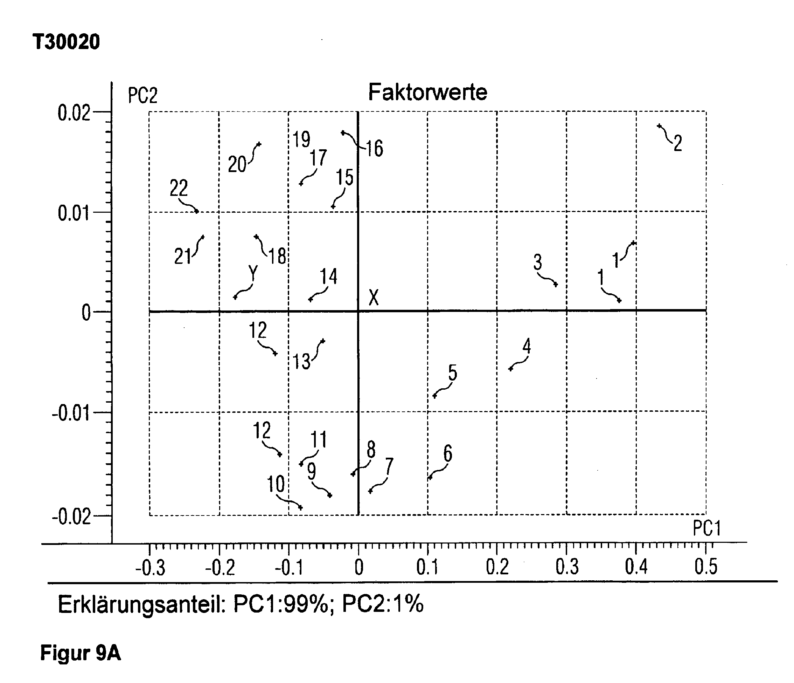

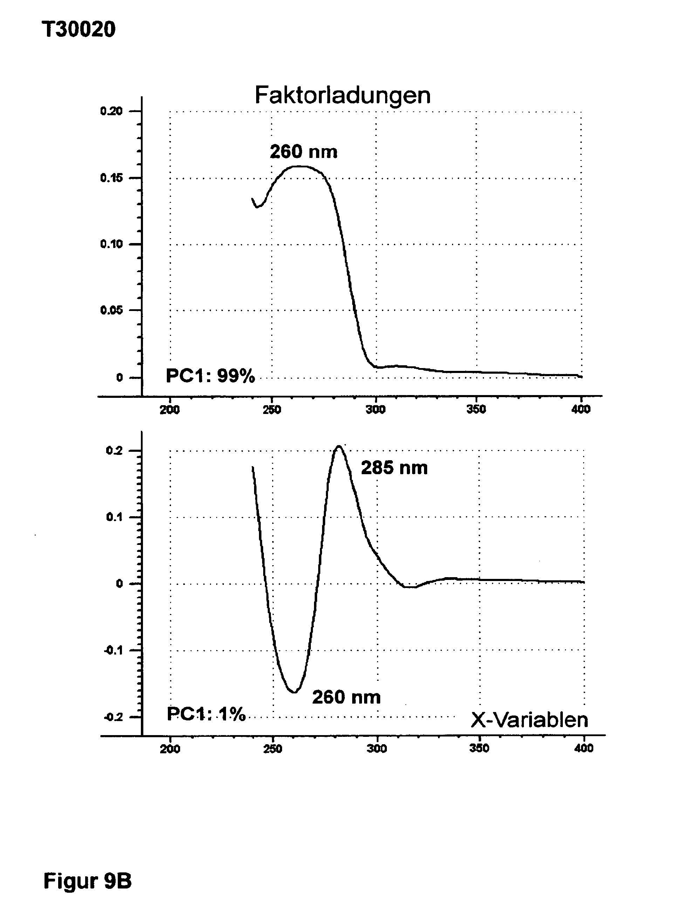

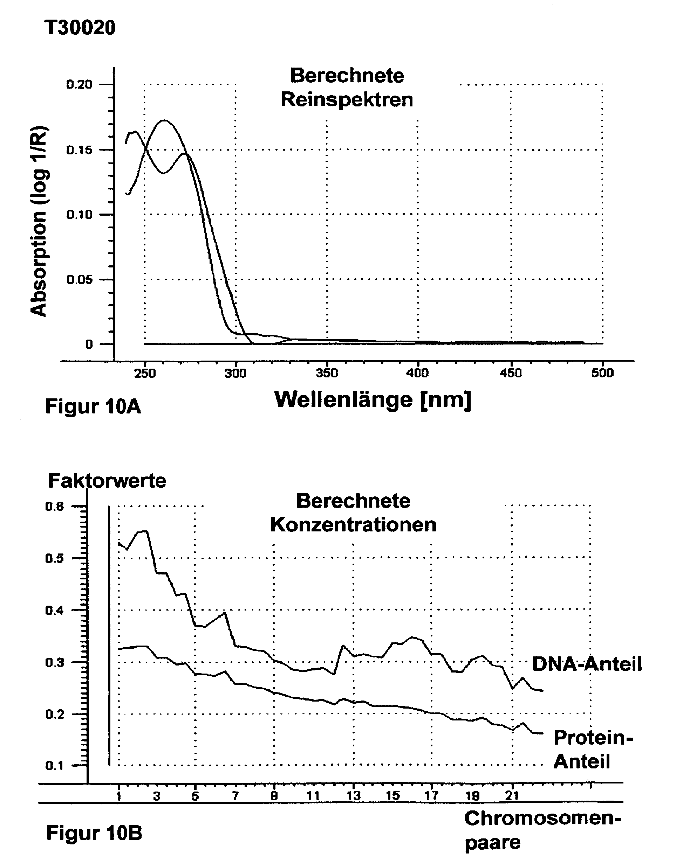

Mit der sich anschließenden Hauptkomponentenanalyse ließ sich ebenfalls, wie bei den Dunkelfeldmessungen, ein Klassifizierungsmodell für den UV-Bereich entwickeln (Figur 9A und 9B). Die erste Hauptkomponente und somit die größte Varianz in den Spektren lässt sich mit einem dazugehörigen Faktoren-Diagramm beschreiben. Dieses zeigt die Gesamtabsorption bei 260 nm. Damit die Chromosomenpaare 14, 15 und 16 überhaupt unterschieden werden können, wurde die zweite Hauptkomponente hinzugezogen. Hierbei zeigt sich der spektrale Verlauf des Faktoren-Diagramms, der im negativen Bereich die Stelle 260 nm und im positiven Bereich die Stelle 285 nm aufweist. Da es sich bei den Chromosomen um keine reine DNA handelt, sondern jedes Chromosom spezifisch mit verschiedenen Proteininseln versehen ist, konnte der Bereich um 285 nm dem Proteinanteil zugeordnet werden. Eine anschließende multivariate Kurvenauflösung zerlegte diese Mischungsspektren in Basisspektren. Ein Vorteil des erfindungsgemäßen Verfahrens liegt darin, dass keine Information über die Spektren der reinen Komponenten vorliegen muss. Die Spektren der reinen Komponenten wurden aus dem Mischspektrum berechnet. Dadurch ergaben sich zwei Spektren, die einem reinen DNA Anteil und einem reinen Proteinanteil entsprechen. Somit lassen sich auch Aussagen über die verschiedenen DNA- und Proteinkonzentrationen der einzelnen Chromosomen treffen (Figur 10A und 10B).

Ein menschlicher Chromosomensatz wurde bei 260 nm entsprechend der DNA und bei 285 nm entsprechend dem Proteinanteil monochromatisch beleuchtet. Die dazugehörigen Absorptionswerte wurden für jeden Pixelbereich in Reflexion registriert, so dass daraus zwei Datensätze generiert werden konnten. Bei Verrechnung der Absorptionswerte miteinander wurden die Chromosomen in einem Karyogramm dargestellt und identifiziert.

### 2. Darstellung von Chromosomen durch 2D-Wellenlängenscannen

### 2.1 Ungefärbte Chromosomen

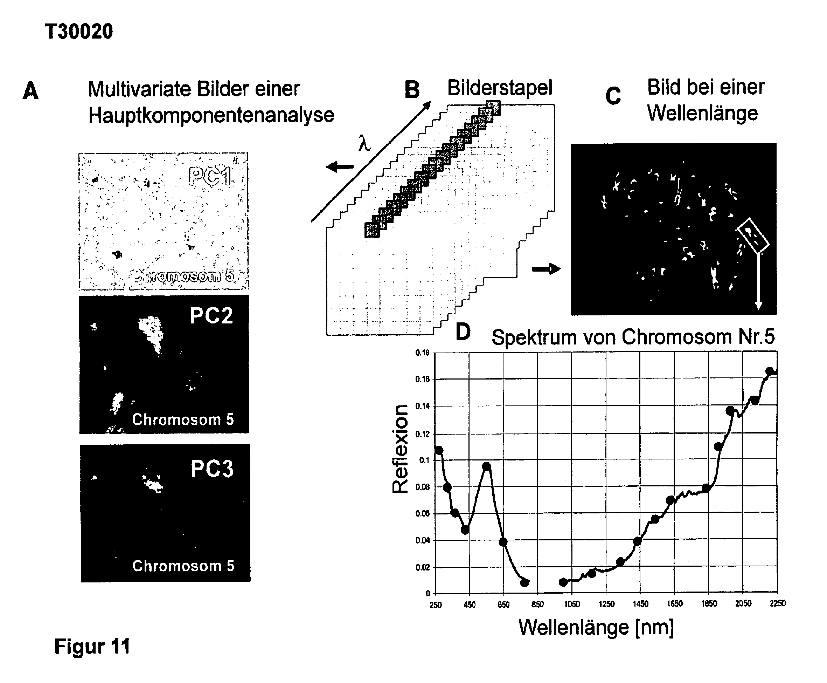

Bei der Darstellung von Chromosomen durch 2D-Wellenlängenscannen wird der ungefärbte Chromosomensatz flächig beleuchtet und das Abbild in einem Reflexionsmodus oder auch Transmissionsmodus wellenlängenabhängig bewertet (Figur 11). Dabei werden die Rauminformation simultan und die Spektralinformation sequentiell aufgenommen, woraus ein Bilderstapel resultiert (Figur 11 B). Für jede Pixelregion des Bilderstapels kann entlang der Wellenlänge, ein Spektrum generiert werden, welches für jedes Chromosom charakteristisch ist. Weiterhin kann sich eine Multivariate Bilder Analyse in Form einer Hauptkomponentenanalyse anschließen. Am Beispiel von Chromosom Nr. 5 ist gezeigt, dass je nach Hauptkomponente (PC) unterschiedliche Informationsgehalte vorliegen, die zur gezielten Unterscheidung der Chromosome herangezogen werden können (Figur 11A, C, D). Ein Vorteil dieser Methode ist die gleichzeitige Aufnahme des gesamten Chromsomensatzes sowie die gezielte Auswahl der Informationen tragenden Wellenlängen.

### 3. Darstellung von Chromosomen durch Linienscannen

### 3.1 Giemsa gefärbte Chromosomen

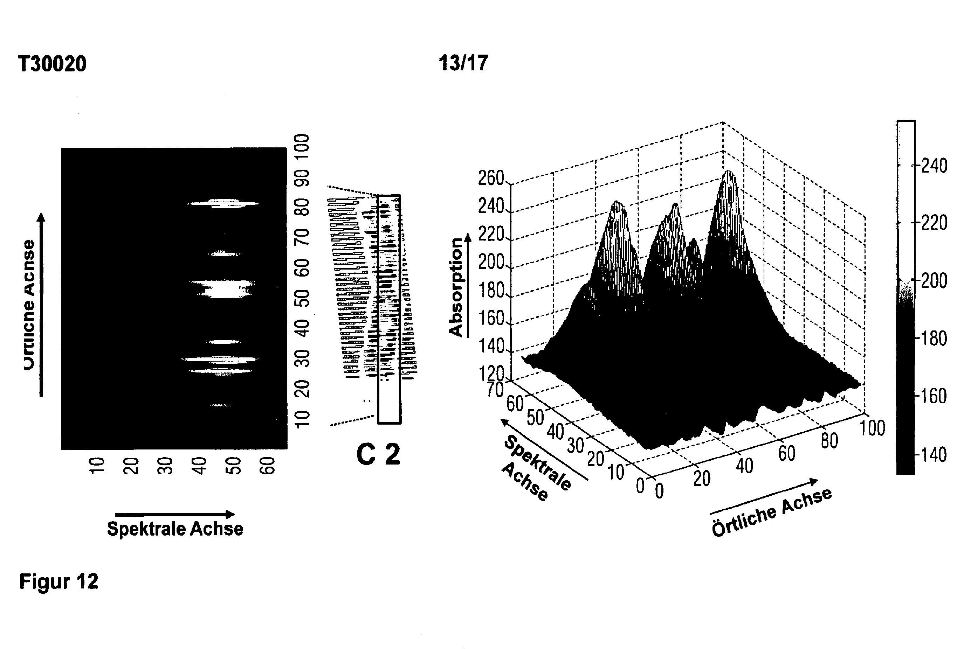

Im Vergleich zum Whiskbroom Kartierungsverfahren wurde mit Hilfe des Linienscannens, auch Pushbroom Verfahren genannt, die gesamte spektrale Information und somit das gebänderte Profil in einem Schritt erfasst (Figur 12). Der maximale Bildausschnitt für den Eingangsspalt betrug bei einer 1000-fachen Vergrößerung 50 x 0,5 µm in lateraler Ausrichtung sowie 5 nm für die spektrale Auflösung. Der mit einem Rahmen markierte Bereich des Chromosoms stellt schematisch den Eingangsspalt in der Bildebene dar und beträgt 10 x 0,5 µm. Unter Berücksichtigung der Nyquist Begrenzung und der auftretenden Beugungsbegrenzung lag die beste mögliche laterale Auflösung, ausgehend von 78 nm je Pixel, bei 128 Pixel für ein 10 µm langes Chromosom. So ließ sich für jeden Punkt entlang der x-Achse ein spezifisches Absorptionsspektrum ermitteln, das wiederum dem gebänderten Profil zugeordnet werden konnte.

### 3.2 Ungefärbte Chromosomen

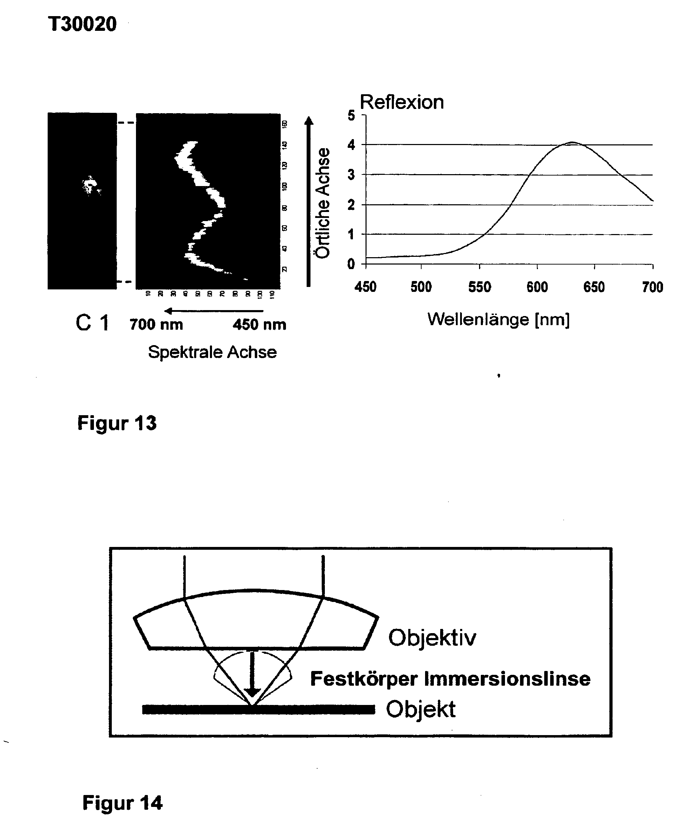

Eine weitere Möglichkeit der Identifizierung und Charakterisierung stellt das Pushbroom Verfahren im Auflicht-Dunkelfeld dar. Hier lässt sich ebenfalls, wie oben beschrieben, die gesamte spektrale Information pro Chromosom in einem Schritt erfassen. Der mit einem Rahmen markierte Bereich stellt schematisch den Eingangsspalt in der Bildebene dar und generiert ein spektrales Bild entlang der örtlichen Achse. An jedem Punkt der Ortsachse lässt sich das dazugehörige Spektrum extrahieren (Figur 13).

### 4. Messungen optischer Eigenschaften von Chromosomen mittels Nahfeldmikroskop

In einer erfindungsgemäßen Ausführungsform wurden die optischen Eigenschaften eines Chromosoms im Nahfeld gemessen. Dazu wurde ein Nahfeldmikroskop mit Festkörper Immersionslinse und ein Mikrospektralphotometer verwendet.

### 4.1 Aufbau der Messapparatur aus Nahfeldmikroskop und Spektralphotometer

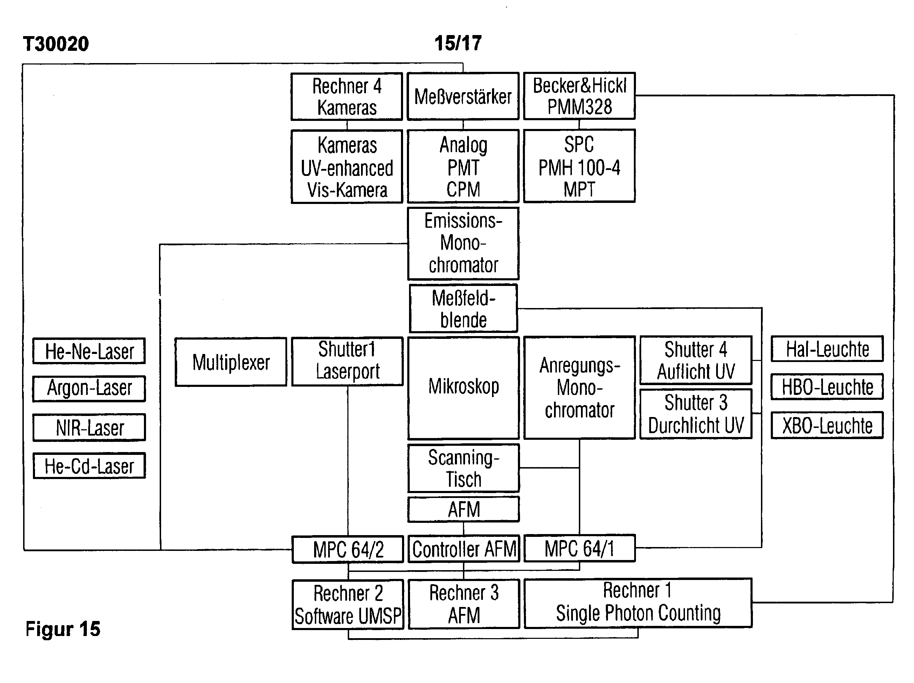

Ein Universal-Mikroskop, ein Nahfeldmikroskop mit Festkörper Immersionslinse und ein Spektralphotometer wurden so verbunden, dass mikroskopische und spektroskopische Untersuchungen im Auflicht und Durchlicht durchgeführt werden konnten. Zusätzlich wurden Beleuchtungen, Monochromatoren zur Wellenlängenselektion für die Anregung und die Emission, Detektoren, und Aperturblenden, in Form von Irisblenden zum Einstellen der Köhler'schen Beleuchtung, um die Mikroskope und das Spektrometer angeordnet. Die Anordnung ist in Figur 15 schematisch dargestellt.

### 4.2 Darstellung von Chromosomen durch Nahfeldmikroskopie

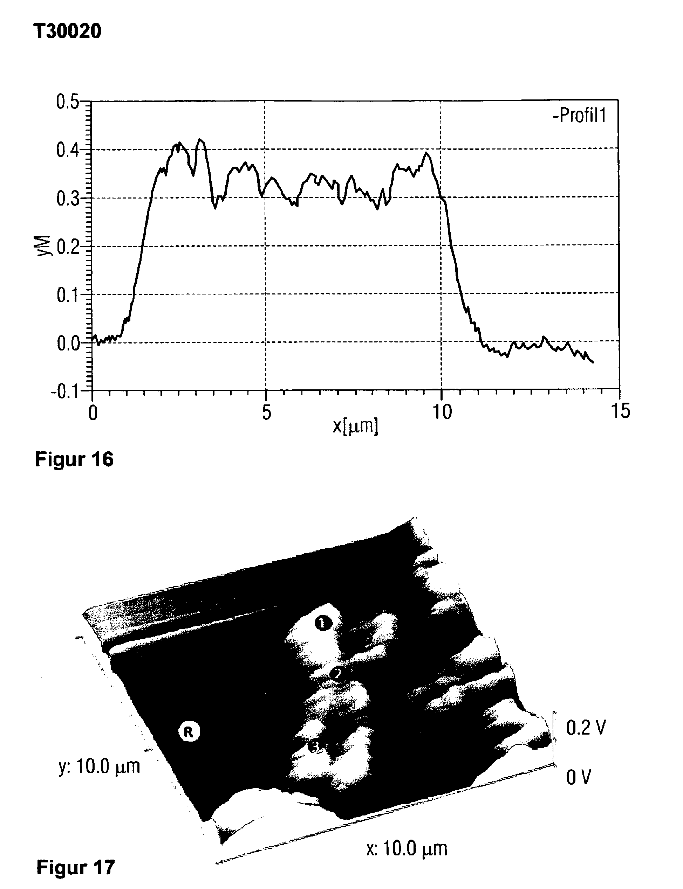

Die dazustellenden Chromosomen wurden vorzugsweise auf Goldobjektträger mit einer anschließenden Trypsinierung präpariert. Die Präparate wurden mit der Festkörper Immersionslinse Punkt für Punkt abgerastert. Das Verfahren beruht auf der Interaktion eines optischen Feldes mit der Chromosomenstruktur. Aufgrund der unterschiedlich dicht gepackten Strukturen variiert die Intensität der Interaktion mit der Sonde, dies wurde über einen Photodetektor registriert. Figur 16 zeigt ein, so erstelltes, Intensitätsprofil über die Länge eines Chromosoms. Die Chromosomen konnten mittels Reflexions-Nahfeldmirkroskopie, Phototunnel-Nahfeldmirkroskopie und/oder Fluoreszenz-Nahfeldmirkroskopie dargestellt werden.

### 4.3 Darstellung von Chromosomen durch Nahfeldspektroskopie

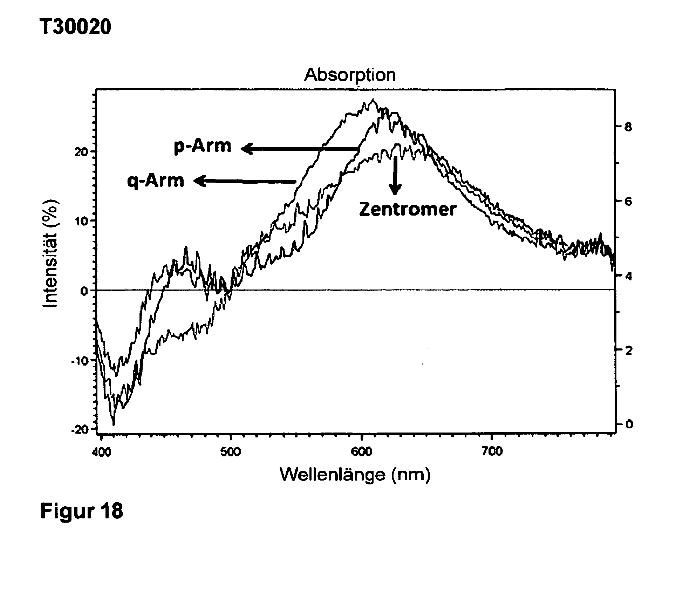

Um hochaufgelöste Spektren lokaler Chromosomenstrukturen aufzunehmen wurde auf beliebige Punkte auf den einzelnen Chromosomen fokussiert. Figur 17 zeigt ein, mittels Nahfeldspektroskopie vergrößert dargestelltes Chromosom. Als Referenz (R) für die Spektroskopie wurde eine Gold-Leerstelle auf dem Präparat gesucht und diese als Referenzspektrum aufgenommen. Anschließend wurden an drei charakteristischen Stellen am Chromosom VIS-Spektren aufgenommen. Die Messung, die in Figur 18 dargestellt ist, erfolgte am p-Arm (1), der Zentromerregion (2) und am q-Arm (3) im Wellenlängenbereich von 400 bis 800 nm. Zudem konnte gezeigt werden, dass das vermeintlich auftretende Rauschen kein Signalrauschen, sondern durch die Struktur der Chromosomen bedingt ist. Die charakteristischen Banden sind auf die variierende Chromatidpackung und damit auf unterschiedliche Brechungsindizes zurückzuführen.

### Beispiele

### 1. Präparation der Metaphasen-Chromosomen

Es wurden Blutlymphozyten von Frauen und Männern, deren Karyotyp zuvor bereits als unauffällig 46, XX oder XY bestimmt worden war, zur Herstellung von Chromosomenpräparaten verwendet. Der Ansatz der Blutkultur sowie die Aufarbeitung der Blutkultur erfolgen nach standardisierten Methoden und Protokollen der humanen Zytogenetik.

### 2. Ansatz der Blutkultur

Venöses Blut wurde in ein mit Heparin benetztes, steriles Röhrchen überführt. Das Vollblut wurde unter sterilen Bedingungen in Kulturflaschen überführt und mit Chromosomenmedium B (Biochrom AG, Katalog-Nr. F5023) versetzt. Die T-Lymphozyten wurden während einer Kultivierungszeit von 72 Stunden bei 37°C im Brutschrank zur Zellteilung anregt.

### 3. Aufarbeitung der Blutkultur

Colcemid wurde in die Blutkultur gegeben, für 30 min bei 37°C inkubiert und anschließend für 6-7 min zentrifugiert. Der Überstand wurde bis zum unteren Konus abgesaugt. Das Sediment wurde danach aufgeschüttelt, und erwärmtes KCl wurde unter ständigem Schütteln zugeben. Die Röhrchen wurden mit Parafilm verschlossen, für 20 min im Wasserbad bei 37°C inkubiert und anschließend für 6-7 min zentrifugiert. Der Überstand wurde bis zum unteren Konus abgesaugt, das Sediment wurde aufgeschüttelt, und 5 ml Fixans (Methanol & Eisessig) wurden zugeben. Das fixierte Sediment wurde für 30 min im Kühlschrank inkubiert, 6-7 min lang zentrifugiert, und der Überstand wurde bis zum unteren Konus abgesaugt. Anschließend wurde das sich ergebende Chromosomenpräparat mit Fixans verdünnt, die Chromosomen wurden auf mit Fixans vorbehandelte Objektträger auftragen, und sie "alterten" für 60 min auf einer Heizplatte bei 100 °C.

### 4. Objektträger

Für die vorliegende Erfindung können verschiedenste Materialien für die Objektträger ausgewählt werden, wie z.B. Glas, Kunststoff, Si-Wafer oder auch Gold-Objektträger. Messungen mit Objektträgern, wie Gold-Objektträgern (Erie Scientific: Biogold) und Si-Wafern lieferten in Reflexion sehr kontrastreiche Abbildungen.

### Referenzen

Bayani JM, Squire JA Applications of SKY in cancer cytogenetics, Cancer Invest. 2002; 20(3):373-86.
Caspersson T., Farber S., Foley G. E., Kudynows J., Modest E. J., Simonsson E., Wagh U., and Zech L. Chemical Differentiation Along Metaphase Chromosomes, Experimental Cell Research 49, 219-& (1968).
Merz T. and R. W. Kessler Spectroscopic Imaging in the Near Field with an Apertureless Solid Immersion Lens System Proceedings of SPIE 6631, (2007).
Oberringer M., Englisch A., Heinz B., Gao H., Martin T., and Hartmann U. Atomic force microscopy and scanning near-field optical microscopy studies on the characterization of human metaphase chromosomes European Biophysics Journal with Biophysics Letters 32, 620 (2003).
Zhao L, Hayes K, Glassman A, A simple efficient method of sequential G-banding and fluorescence in situ hybridization, Cancer Genet Cytogenet. 1998 May; 103(1):62-4.
WO 98/58288
Lejeune J, Rethore M-O, de Blois J-C, Ravel A, Chromosomes achromiques. Une methode simple d'observation, Annales de Genetique 27(4), 257-258.

## Patentansprüche

1. Verfahren zum Analysieren von Chromosomen durch
a) Bereitstellen eines umgefärbten Chromosomenpräparats;
b) Messen mindestens einer Interferenzeigenschaft des Chromosomenpräparats indem die spektralen Eigenschaften des Chromosomenpräparats mittels Whiskbroom, Staring und/oder Pushbroom Aufzeichnung in einem spektralen Bereich innerhalb von 180 bis 25.000 nm ermittelt und mit mindestens einer multivariaten Technik analysiert werden; und
c) Charakterisieren mindestens einer Chromosomenstruktur mittels der Interferenzeigenschaft.

2. Verfahren nach einem der vorhergehenden Ansprüche, wobei die Eigenschaft des Chromosomenpräparats in einem Modus gemessen wird, der aus der Gruppe ausgewählt ist, bestehend aus Transmissionsmodus, Reflexionsmodus, Polarisationsmodus, Absorptionsmodus, Anregungsmodus und Emissionsmodus.

3. Verfahren nach einem der vorhergehenden Ansprüche, wobei der Transmissionskoeffizient, der Reflexionskoeffizient, der Absorptionskoeffizient und/oder der Streukoeffizient des Chromosomenpräparats bestimmt wird.

4. Verfahren nach Anspruch 1, wobei die multivariate Technik eine Hauptkomponentenanalyse oder ein Mustererkennungsverfahren ist.

5. Verfahren nach einem der vorhergehenden Ansprüche, wobei die Chromosomenstruktur eine chemische und/oder morphologische Chromosomenstruktur ist.

6. Verfahren nach einem der vorhergehenden Ansprüche, wobei die Interferenzeigenschaft des Chromosomenpräparats mittels Nahfeldmikroskop gemessen wird.

7. Verfahren nach Anspruch 6, wobei eine Festkörper Immersionslinse am Mikroskop verwendet wird.

8. Verfahren nach Anspruch 6 oder 7, wobei die Interferenzeigenschaft des Chromosomenpräparats im Photonentunnel-Nahfeld-Modus gemessen wird.

9. Verfahren nach einem der Ansprüche 6 bis 8, wobei das Verfahren mit einer Rasterkrafttechnik kombiniert wird, vorzugsweise ausgewählt aus der Gruppe bestehend aus Rastersondenmikroskopie, Atomkraftmikroskopie, Rasternahfeldmikroskopie, optische Rasternahfeldspektroskopie und Nahfeldspektroskopie.

## Claims

1. Method for analysing chromosomes by means of
a) providing a non-dyed chromosome preparation;
b) measuring at least one interference property of the chromosome preparation by the spectral properties of the chromosome preparation being established by means of Whiskbroom, Staring and/or Pushbroom recording in a spectral range within from 180 to 25000 nm and being analysed with at least one multivariate technique; and
c) characterising at least one chromosome structure by means of the interference property.

2. Method according to any one of the preceding claims, wherein the property of the chromosome preparation is measured in a mode which is selected from the group consisting of transmission mode, reflection mode, polarisation mode, absorption mode, excitation mode and emission mode.

3. Method according to any one of the preceding claims, wherein the transmission coefficient, the reflection coefficient, the absorption coefficient and/or the scatter coefficient of the chromosome preparation is determined.

4. Method according to claim 1, wherein the multivariate technique is a principal component analysis or a pattern recognition method.

5. Method according to any one of the preceding claims, wherein the chromosome structure is a chemical and/or morphological chromosome structure.

6. Method according to any one of the preceding claims, wherein the interference property of the chromosome preparation is measured by means of a near-field microscope.

7. Method according to claim 6, wherein a solid immersion lens is used on the microscope.

8. Method according to claim 6 or claim 7, wherein the interference property of the chromosome preparation is measured in the photon tunnelling near-field mode.

9. Method according to any one of claims 6 to 8, wherein the method is combined with a scanning force technique, preferably selected from the group consisting of scanning probe microscopy, atomic force microscopy, scanning near-field microscopy, optical scanning near-field spectroscopy and near-field spectroscopy.

## Revendications

1. Procédé pour l'analyse de chromosomes par le biais de
a) la mise à disposition d'une préparation de chromosomes non colorée ;
b) la mesure d'au moins une propriété d'interférence de la préparation de chromosomes en déterminant les propriétés spectrales de la préparation de chromosomes au moyen d'un enregistrement Whiskbroom, Staring etlou Pushbroom dans une plage spectrale allant de 180 à 25000 nm et en les analysant avec au moins une technique à plusieurs variables ; et
c) la caractérisation d'au moins une structure de chromosomes au moyen de la propriété d'interférence.

2. Procédé selon l'une des revendications précédentes, dans lequel la propriété de la préparation de chromosomes est mesurée dans un mode qui est sélectionné dans le groupe constitué par le mode de transmission, le mode de réflexion, le mode de polarisation, le mode d'absorption, le mode d'excitation et le mode d'émission,

3. Procédé selon l'une des revendications précédentes, dans lequel le coefficient de transmission, le coefficient de réflexion, le coefficient d'absorption et/ou le coefficient de dissémination de la préparation de chromosomes sont déterminés.

4. Procédé selon la revendication 1, dans lequel la technique à plusieurs valables est une analyse des composants principaux ou un procédé de reconnaissance de modèles.

5. Procédé selon l'une des revendications précédentes, dans lequel la structure de chromosomes est une structure de chromosomes chimique et/ou morphologique.

6. Procédé selon l'une des revendications précédentes, dans lequel la propriété d'interférence de la préparation de chromosomes est mesurée au moyen d'un microscope en champ proche.

7. Procédé selon la revendication 6, dans lequel une lentille à immersion solide est utilisée sur le microscope.

8. Procédé selon la revendication 6 ou 7, dans lequel la propriété d'interférence de la préparation de chromosomes est mesurée en mode tunnel de photons et champ proche,

9. Procédé selon l'une des revendications 6 à 8, dans lequel le procédé est combiné avec une technique à balayage, de préférence sélectionnée dans le groupe constitué par la microscopie à balayage par sondes, la microscopie à force atomique, la microscopie à balayage en champ proche, la spectroscopie à balayage en champ proche optique et la spectroscopie en champ proche.
